(19) Europäisches Patentamt
European Patent Office
Office européen des brevets

(11) EP 2 071 783 B1

(12) **EUROPEAN PATENT SPECIFICATION**

(45) Date of publication and mention
of the grant of the patent:
**17.07.2013 Bulletin 2013/29**

(51) Int Cl.:
*H04L 12/58* (2006.01)

(21) Application number: **08170393.6**

(22) Date of filing: **01.12.2008**

(54) **Method and system for providing electronic communications with dynamically provided content to third party mail transfer agents**

Verfahren und System zur Bereitstellung elektronischer Kommunikation mit dynamisch bereitgestelltem Inhalt an Drittversendeübertragungsvermittler

Procédé et système de fourniture de communications électroniques avec un contenu fourni de manière dynamique à des agents de transfert de messagerie de tiers

(84) Designated Contracting States:
**DE FR GB**

(30) Priority: **10.12.2007 US 953647**

(43) Date of publication of application:
**17.06.2009 Bulletin 2009/25**

(73) Proprietor: **Adknowledge, Inc.**
**Kansas City, MO 64112 (US)**

(72) Inventors:
• **Lynn, Scott**
**Kansas City, MO Missouri 64113 (US)**
• **Brady, Shane**
**Plattsburg, MO Missouri 64477 (US)**
• **O'Bryan, Dan**
**Kansas City, MO Missouri 64113 (US)**

(74) Representative: **Kudlek & Grunert Patentanwälte**
**Postfach 33 04 29**
**80064 München (DE)**

(56) References cited:
**EP-A- 1 251 669      WO-A-2007/085023**
**GB-A- 2 368 418      US-A1- 2005 038 861**
**US-B1- 7 184 970**

• **VAN AMSTEL P ET AL: "An interchange format for cross-media personalized publishing"** COMPUTER NETWORKS, ELSEVIER SCIENCE PUBLISHERS B.V., AMSTERDAM, NL, vol. 33, no. 1-6, 1 June 2000 (2000-06-01), pages 179-195, XP004304766 ISSN: 1389-1286

EP 2 071 783 B1

**Description**

**TECHNICAL FIELD**

The present disclosed subject matter relates to content delivery over networks and components associated therewith. In particular, the present disclosed subject matter relates to providing content to a third party who serves as the mail transfer agent for sending an electronic communication to an intended recipient (user), who receives access to the content upon opening the electronic communication. The content of the electronic communication is provided by the content provider, and may include content obtained when the user opens the electronic communication. The content of the opened electronic communication is such that intended recipient (user) may activate a link in the provided content to arrive at a target web site.

**BACKGROUND**

Electronic communications have dramatically changed the ways in which people communicate. Electronic mail, commonly referred to as e-mail, is a widely used form of electronic communication. E-mail is the exchange of computer-stored messages by telecommunication, over a network, such as the Internet. E-mail accounts for the largest percentage of total traffic on the Internet. E-mail usage is expected to increase exponentially in the next few years as increasing numbers of people have access to computers, and therefore, the World Wide Web (WWW).

E-mail communications are desirable, as they are current, usually in real time, and are non-intrusive. Conversely, a telephone call is intrusive, as it must be attended to at the moment it is received, and may interfere with the recipient's activities. The e-mail recipient may open the e-mail when desired, and may delete the e-mail without reading it.

E-mail distribution to individuals and organizations is quick and economical. Senders create recipient lists, that may include thousands of recipients. Recipient e-mail addresses can be added and deleted from the lists as desired. The e-mail is composed once and sent to multitudes of recipients, all of whom receive the e-mail instantaneously. The e-mail can be duplicated and sent to recipients from another recipient list, typically in a matter of minutes.

In US 7,184,970 B1 a publishing system is disclosed that can provide direct marketing advertising together with material generated by members of an on-line community, editorial content or material generated by special guests. Individualized electronic mail messages addressed to members of an on-line community can be generated. Each individualized electronic mail message includes information from one or more of advertising submitted by vendors via electronic mail, electronic mail messages received from community members and special guests, and editorial content. The information included in a particular individualized electronic mail message depends on values assigned to the messages from community members, to the advertising from vendors and to the editorial content. The assigned values are indicative of the relevance of the community member messages, the advertising and editorial content, respectively, to particular segments of the on-line community. The information included in the particular individualized electronic mail message also depends on data previously provided by a community member to whom the particular individualized electronic mail message is addressed.

Electronic mail nowadays is of utmost importance for information exchange. Electronic mails are used, for example, for distributing relevant information among selected persons, e. g. employees or various departments in a company. Contraction parties are able to exchange information (also, for example, in the form of attached documents) in a real time manner. Technical updates or software updates can be delivered via electronic mail, e. g. to car manufactures or garages or inspection agencies. In many cases, it is decisive to provide the most topical information or data to a recipient. Furthermore, it can be of significant importance to provide a topical information or data to a recipient of an electronic mail even if this electronic mail is not opened instantaneously but at a later point. In order to deliver information which is topical at the time the electronic mail will be opened, the corresponding information or data has to be placed into the electronic mail at a time corresponding to the electronic mail being opened.

On the other hand, electronic mail is becoming ever popular for advertising. Business are allocating more of their advertising budgets to electronic media, such as networks, including the Internet. The advertisements are typically carried in electronic communications, and typically e-mail. For example, one type of e-mail suitable for advertising is disclosed in commonly owned U.S. Patent Application Publication No. 2005/0038861 A1 (Published U.S. Patent Application Serial No. 10/915,975, filed August 11, 2004), entitled: Method And System For Dynamically Generating Electronic Communications. This document discloses, for example, providing content to e-mail, used for advertising, product promotion and the like, when the e-mail is opened.

E-Mail communication often is in batch e-mails. In case of e-mail advertising, sending batches of e-mails is an all or nothing proposition, as not all recipients will be interested in the advertisement. As a result, only certain recipients of the e-mail will remain captive customers. The other e-mails that were not opened or not responded to due to lack of interest in the subject matter are considered wasted. E-mail recipients may be targeted, so that batch e-mail may be sent, but again, such a batch e-mail, will not be interesting to all recipients, whereby a portion of the e-mails of the batch e-mail are wasted. In other cases it may be very important that the majority of recipients do open or respond to the e-mails sent. In general, the portion of wasted (not opened or not responded to) e-mails is desired to be at a minimum.

## SUMMARY OF THE DISCLOSED SUBJECT MATTER

This document references terms that are used consistently or interchangeably herein. These terms, including variations thereof, are as follows.

The term "click", "clicks", "click on", "clicks on" involves the activation of a computer pointing apparatus, such as a device commonly known as a mouse, on a location on a computer screen display, for example, an activatable link, that causes an action of the various software and or hardware supporting the computer screen display.

A banner is a graphic that appears on the monitor of a user, typically over a web page being viewed. A banner may appear on the web page in forms such as inserts, pop ups, roll ups, scroll ups, and the like.

A "web site" is a related collection of World Wide Web (WWW) files that includes a beginning file or "web page" called a home page, and typically, additional files or "web pages." The term "web site" is used collectively to include "web site" and "web page(s)."

A uniform resource locator (URL) is the unique address for a file, such as a web site or a web page that is accessible on the Internet.

A server is typically a remote computer or remote computer system, or computer program therein, that is accessible over a communications medium, such as the Internet, that provides services to other computer programs (and their users), in the same or other computers.

A "creative" is electronic data representative of, for example, an advertising campaign, or other informational campaign or information, that appears as an image in graphics and text on the monitor of a user or intended recipient. The content for the creative may be static, as it is fixed in time. The creative typically includes one or more "hot spots" or positions in the creative, both in electronic data and the image that support underlying links, that are dynamic, as they are placed into the creative, at the time the creative is activated, which may be upon the opening of an electronic communication, or e-mail with the creative. The underlying links may also be "static", in that they are placed into the creative at a predetermined time, such as when the creative is created, and fixed into the hot spots at that time. The hot spots include activatable graphics and/or text portions that overlie the links. When these activatable portions are activated or "clicked" on by a mouse or other pointing device, the corresponding underlying link is activated, causing the user's or intended recipients browsing application or browser to be directed to the target web site corresponding to the activated link.

Pay Per Click (PPC), also known as price per click and cost per click, as used herein, is the amount of money that an advertiser, web site promoter, or other party who owns or is associated with a web site, will pay to a system administrator for providing their advertisement, listing, link or the like to a user, and the user clicks their mouse or pointing device on the advertisement, listing, link or the like, such that the user's browser is directed to the targeted web site associated with the advertiser, web site promoter, or other party who owns or is associated with the targeted web site.

A "client" is an application that runs on a computer, workstation or the like and relies on a server to perform some operations, such as sending and receiving e-mail.

"n" and "nth" in the description below and the drawing figures represents the last member of a series or sequence of servers, databases, caches, components, listings, links, data files, etc.

"Click through" or "click throughs" are industry standard terms for a user clicking on a link in an electronic object, such as an e-mail, banner, listing on a web site, for example, a web site of a search engine, or the like, and ultimately having their browser directed to the targeted data object, typically a web site, associated with the link.

The present disclosed subject matter improves on the contemporary art in that it provides individualized communications to each user, based on data corresponding to each user. Individualized electronic communication play an important role in the various examples of electronic mail communication as described above. Individualized communications are particularly important in security sensitive environments where users connected via a network must be addressed individually. Another application where providing individualized communications to each user, based on data corresponding to each user, is advantageous, is advertising. In the present application, "advertising communications", "advertising campaigns" or "advertising" in general, should be understood as a specific application of the present invention which is not limited to the field of advertising. Rather, the present invention is described in the following mainly with its application to the field of advertising. This, however, only serves the purpose of illustrating the invention with a common example of electronic communication. For example, the present disclosed subject matter provides individualized advertising communications, such as in the form of electronic mail (e-mail), for each specific user, based on data corresponding to that particular user. Moreover, the electronic mail, is provided by a provider, who also provides the content, but does not send the e-mail to the user. Rather, the sender of the e-mail may be third party sender, and the e-mail is electronically linked by a content provider, who provides the content to the e-mail, for example, once the e-mail is opened. Alternately, the content of the e-mail can be provided with static or fixed content. The specific e-mail for each intended recipient is selected by processes detailed herein.

The object underlying the present invention is to provide a method, a system, and a computer program for automatically providing content to an electronic communication being delivered to a user (recipient), which communication is individualized based on data corresponding to each user. To this purpose, the user has to be linked to one or more servers via a network. It is another object of the present invention to provide individualized communications to each user connected to such a network in a time-effective manner, preferably in a real-time manner. It is another object to provide a corresponding system for electronic communication, and particularly, if possible, not to increase the number of components of an existing system for electronic communication, and to use as little additional memory space as possible. Finally, the steps of providing individualized communications to each user should be adjusted and coordinated to result in a system which can be effectively used for a large number of users. "Individualized communication" shall include delivery of information or data in such communication, which is topical at the point of time the communication is opened.

This object is achieved by the present invention as defined in the independent claims. Advantageous embodiments are given by the respective subclaims.

The disclosed subject matter is directed to systems and methods for providing individualized communications to each user, based on data corresponding to each individual user, for placement into electronic communications by a sending party that may not be related to the party providing the content. The content provided to the electronic communications may be generated at least in part when the communication is opened by the intended recipient (the individual user). The content may be the body of an electronic mail as well as, for example, a tag line or footer in an electronic mail.

By providing to the sending party the content of the e-mail, and the third party sending the e-mail, for example, an advertising e-mail, sending individualized e-mails, for specific advertising campaigns is highly efficient. This is because the proper recipients (users) are targeted, with a high percentage chance that these recipients will respond to the e-mail and remain a captive customer of the target web site or other web site linked thereto.

The disclosed subject matter is directed to a method for providing content to an electronic communication. The method includes receiving an identifier corresponding to the intended recipient of an electronic communication, and obtaining data for the content of the electronic communication based on the received identifier. Data is then provided for the content of the electronic communication to the entity associated with sending the electronic communication to the intended recipient, for placement into the electronic communication. The electronic communication may be, for example, electronic mail (e-mail).

The disclosed subject matter is also directed to another method for providing content to an electronic communication. This method includes receiving an identifier corresponding to the intended recipient of an electronic communication, obtaining data for the content of the electronic communication based on the received identifier, and, providing the data for the content of the electronic communication to the entity associated with sending the electronic communication to the intended recipient. This data is for placement into the electronic communication, and includes at least one image link, for obtaining the body of the opened electronic communication, and at least one click link, for providing activatable links for the body, the activatable links, for example, associated with uniform resource locators (URLs), such as those for target web sites. The activatable links, for example, may be obtained dynamically, when the electronic communication is opened or otherwise activated.

The disclosed subject matter is also directed to another method for providing content to an electronic communication. The method includes receiving an identifier corresponding to the intended recipient of an electronic communication, obtaining data for the content of the electronic communication based on the received identifier, and, providing the data for the content of the electronic communication to the entity associated with sending the electronic communication to the intended recipient, for placement into the electronic communication as a text box. The data includes at least one click link. The click link, for example, provides an activatable link, that is associated with a uniform resource locators (URL), such as that for a target web site. For example, the actual URL(s) is/are obtained when the requisite portion of the text box is activated or clicked.

The disclosed subject matter is directed to a system for providing content to electronic communications. The system includes multiple components. A first component is for receiving an identifier corresponding to the intended recipient of an electronic communication. A second component is for obtaining data for the content of the electronic communication based on the received identifier. A third component is for providing the data for the content of the electronic communication to the entity associated with sending the electronic communication to the intended recipient, for placement into the electronic communication. A fourth component is for receiving the data of the content of the electronic communication and providing the content to electronic communication once it has been opened by the intended recipient.

The disclosed subject matter is also directed to a system for providing content to electronic communications. The system includes a first component for receiving an identifier corresponding to the intended recipient of an electronic communication and a second component for obtaining content data for the content of the electronic communication based on the received identifier, the content data including data for an activatable link. There is also a third component for providing the content data for the content of the electronic communication to the entity associated with sending the electronic communication to the intended recipient, for placement into the electronic communication. There is a fourth component for receiving data that the activatable link was activated and obtaining the uniform resource locator of a target web site when the activatable link is activated.

The disclosed subject matter is also directed to a system that provides content to opened electronic communications based on the time in which the electronic communications are opened. The content is provided in accordance with identifiers based on received data, the identifiers being provided by a content provider with content (inventory of content) for the specific identifier. For example, the content providers may be keyword providers who have content (inventory) for the specific keyword, keyphrase or the like, selected as a result of the receipt of the first data from the opened electronic communication. The electronic communication may be, for example, an electronic mail (e-mail).

The disclosed subject matter is also directed to a method for providing content to an electronic communication, for example, an electronic mail (e-mail). The method includes, receiving first data from the intended recipient of an electronic communication at a time corresponding to the electronic communication is opened, and providing first content and second content to an application associated with the opened electronic communication corresponding to the time the electronic communication is opened. The providing of the first content and the second content includes, determining a provider for the first content for the opened electronic communication based on the received first data, the received first data causing the selection of an identifier for the first content and a provider for the first content, the provider having access to the first content corresponding to the identifier, and, delivering the data for the first content of the electronic communication to the application associated with the opened electronic communication, for example, an e-mail application. Data for the second content for the electronic communication for supporting the data for the first content, in the form of at least one image that supports at least one activatable link based on the received identifier, is determined and this data for the second content is delivered to the application associated with the opened electronic communication.

The disclosed subject matter is also directed to a system for providing content to an electronic communication, for example, an electronic mail (e-mail) of components, that may all reside on a single or multiple servers. There is a first component for receiving first data from the intended recipient of an electronic communication at a time corresponding to the electronic communication is opened. There is a second component for providing first content and second content to an application associated with the opened electronic communication corresponding to the time the electronic communication is opened. The second component is also configured for determining a provider for the first content for the opened electronic communication based on the received first data, the received first data causing the selection of an identifier for the first content and a provider for the first content, the provider having access to the first content corresponding to the identifier, obtaining the data for the first content for the electronic communication from the determined provider; and, delivering the data for the first content of the electronic communication to the application associated with the opened electronic communication. There is also a third component for determining data for the second content for the electronic communication for supporting the data for the first content in the form of at least one image that supports at least one activatable link based on the received identifier, and there is a fourth component for delivering the data for the second content to the application associated with the opened electronic communication.

The disclosed subject matter is also directed to a computer-usable storage medium. The computer-usable storage medium has a computer program embodied thereon for causing a suitably programmed system to provide content to an electronic communication. This is done by the performance of the steps, when the program is executed on the system. The steps include, receiving first data from the intended recipient of an electronic communication at a time corresponding to the electronic communication is opened, and, providing first content and second content to an application associated with the opened electronic communication, for example, an electronic mail (e-mail), corresponding to the time the electronic communication is opened. The providing of the first and second content includes, determining a provider for the first content for the opened electronic communication based on the received first data, the received first data causing the selection of an identifier for the first content and a provider for the first content, the provider having access to the first content corresponding to the identifier, causing the data for the first content for the electronic communication from the determined provider to be obtained, and, causing the data for the first content of the electronic communication to the application associated with the opened electronic communication to be delivered. The computer usable storage medium also performs additional steps, when the program is executed on the system. These additional steps include, determining data for the second content for the electronic communication for supporting the data for the first content in the form of at least one image that supports at least one activatable link based on the received identifier, and causing the data for the second content to the application associated with the opened electronic communication to be delivered.

## BRIEF DESCRIPTION OF DRAWINGS

Attention is now directed to the drawings, where like reference numerals or characters indicate corresponding or like components. In the drawings:

FIG. 1 is a diagram of an exemplary system on which an embodiment of the disclosed subject matter is performed;

FIG. 2 is a flow diagram of a process for generating the content for an e-mail in accordance with an embodiment of the disclosed subject matter;

FIG. 3 is a screen shot showing e-mail communications in the mailbox of a recipient;

FIG. 4 is a screen shot of an exemplary template in accordance with an embodiment of the disclosed subject matter;

FIG. 5 is a flow diagram of the request processing sub process of FIG. 2;

FIG. 6A is a diagram of a key cache in accordance with an embodiment of the disclosed subject matter;

FIG. 6B is a diagram of a cache for Campaigns and associated keywords;

Fig. 6C is a diagram of the selected portion of Fig. 6B;

FIG. 7 is a diagram of a listing cache in accordance with an embodiment of the disclosed subject matter;

FIG. 8 is a diagram of a click cache in accordance with the disclosed subject matter;

FIG. 9 is a diagram of a creative in accordance with the disclosed subject matter;

FIG. 10 is a screen shot of the a creative in accordance with the disclosed subject matter;

FIG. 11 is a flow diagram of a process for directing an e-mail recipient to a target web site, from a redirect uniform resource locator (URL), upon responding to an e-mail in accordance with the disclosed subject matter;

FIG. 12 is a screen shot showing a web page accessed from a redirect uniform resource locator in accordance with the disclosed subject matter;

FIG. 13A is a diagram of an exemplary system on which another embodiment of the disclosed subject matter is performed;

FIG. 13B is a screen shot of an e-mail being composed for use on the system of FIG. 13A;

FIG. 14 is a flow diagram of a process for generating the content for a tag line for placement into an e-mail in accordance with another embodiment of the disclosed subject matter;

FIG. 15A is a diagram of the system of FIG. 13A with an e-mail having been received by an intended recipient;

FIG. 15B is a screen shot of the in box of the intended recipient of the e-mail;

FIG. 15C is a screen shot of the e-mail as received by the intended recipient; and,

FIG. 16 is a flow diagram of a process for directing an e-mail recipient to a target web site, from a redirect uniform resource locator (URL), upon activating a tag line or footer in the opened e-mail.


## DETAILED DESCRIPTION OF THE DRAWINGS

The present disclosed subject matter is related to systems and methods for providing content to third parties, for example, publishers, for placement into electronic communications by the third party or publisher, for intended recipients of the third parties or publisher. The recipients are typically in a database or list of the publisher. The publisher may not be related to the content provider and the publisher is the sender of the electronic communication with the provided content. The electronic communications that include the provided content are such that portions of the content are time relevant, in that they are generated when the electronic communication is activated, opened, or the like. Again, the embodiments described in connection with the figures focus on advertising campaigns and the like. Such examples should only make the understanding of the present invention easier and are not intended to limit the present invention to an application in the field of advertising. Electronic communications including time relevant content play also an important role in technological applications and in security sensitive applications.

The content for the electronic communication, for example, data corresponding to a predetermined image with portions therein for receiving content generated when the electronic communication is opened, is delivered to the intended recipient by the third party or publisher. The time relevant or dynamic content delivered to and placed into designated locations of the image when the electronic communication typically in the form of an electronic mail (e-mail), is opened, for example, in accordance with U.S. Patent Application Publication No. 2005/0038861 A1, (Published U.S. Patent Application Serial No. 10/915,975, filed August 11, 2004), entitled: Method And System For Dynamically Generating Electronic Communications, this document expressly being referred to in this regard.

The content, formed, for example, of static and dynamic portions, as well as the e-mails and the data to fill the static content or image, resulting from the opened e-mail, are sent over digital, electronic, wire line or wireless networks, such as the Internet. The time relevant content for the e-mail is dynamic, as it may be generated in real-time, and assembled when the electronic communication, for example, the electronic mail, is opened by the recipient (user). Should the electronic communication be closed and reopened at a subsequent time, it may have dynamic content different from the dynamic content when originally opened, as its content is assembled at the time of reopening, for example, as disclosed in U.S. Patent Application Publication No. 2005/0038861 A1 (Published U.S. Patent Application Serial No. 10/915,975, filed August 11, 2004).

Throughout this document, numerous textual and graphical references are made to trademarks. These trademarks are the property of their respective owners, and are referenced only for explanation purposes herein.

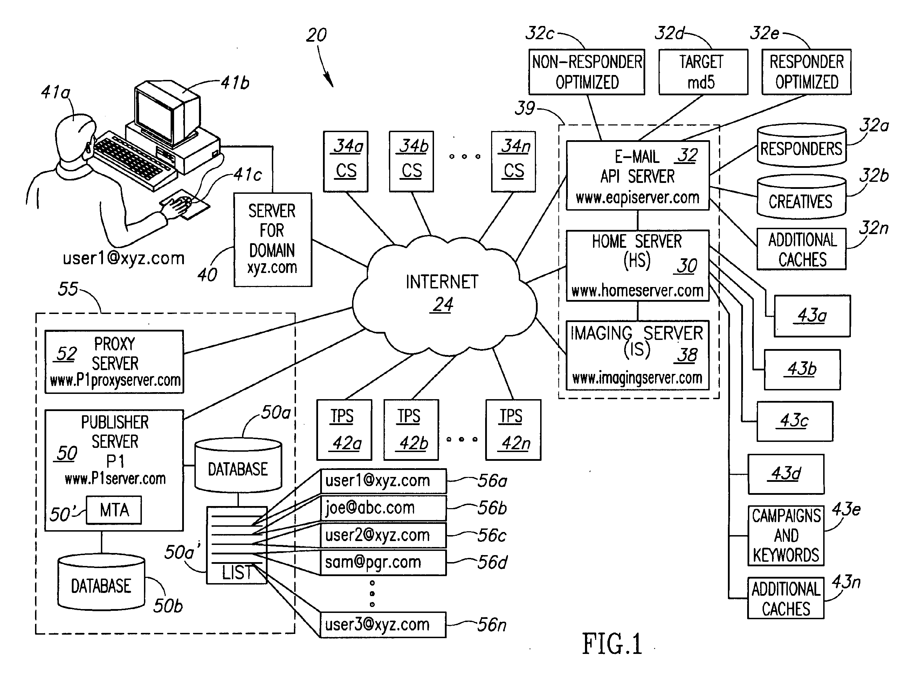

FIG. 1 shows the present disclosed subject matter in an exemplary operation. The present disclosed subject matter employs a system 20, formed of various servers and server components, that are linked to a network, such as a wide area network (WAN), that may be, for example, the Internet 24.

There are, for example, numerous servers that form the system 20. These servers, for example, include a home server (HS) 30, an e-mail application program interface (API) server 32, one or more content servers (CS) 34a-34n, and an imaging server (IS) 38. The home server (HS) 30, e-mail API server 32 and imaging server (IS) 38, may be electronically linked internally, and may be controlled by the same entity, who is a content provider, the entity indicated in by the broken line block 39.

These servers 30, 32, 34a-34n and 38 are linked to the Internet 24, so as to be in electronic communication with each other. The servers 30, 32, 34a-34n and 38 include multiple components for performing the requisite functions as detailed below, and the components may be based in hardware, software, or combinations thereof. The servers 30, 32, 34a-34n and 38 may also have internal storage media and/or be associated with external storage media. Servers 30, 32 and 38 are typically coupled in their operation to provide content, for example, as creatives with activatable links (either placed into the creative at a predetermined time or placed into the creative when the supporting electronic communication (for example, when the e-mail is opened), to be utilized by third parties, in providing electronic communications (for example, e-mails), to their intended recipients (users).

A publisher 55 may be separate and unrelated to the entity 39 that controls the servers 30, 32, 38. This entity 39 may also be the same entity who provides the text and images with links in the "hot spots" of the creatives. The links, when the intended recipient activates them in the creative, direct the recipient (recipient's browser or browsing application) to a targeted web site. The entity 39 may be one or more entities.

The servers 30, 32, 34a-34n, 38 of the system 20 are linked (either directly or indirectly) to an endless number of other servers and the like, via the Internet 24. Other servers, exemplary for describing the operation of the system 20, include a domain server 40 for the domain (for example, the domain "xyz.com") of the user 41a (for example, whose e-mail address is user1@xyz.com), linked to the computer 41b of the user 41a. Still other servers may include third party servers (TPS) 42a-42n, controlled by publishers, content providers, web site promoters and other entitles, that may or may not be related to any of the entities detailed above.

For example, the intended recipient or user 41a has a computer 41b (such as a multimedia personal computer with a Pentium® CPU, that employs a Windows® operating system), that uses an e-mail client. The computer 41b is linked to the Internet 24. The computer 41b may also be operated by an activatable pointer, such as a mouse 41c or the like. The user 41a may have an e-mail address, for example, of <u>user1@xyz.com</u>.

There is also a server 50, associated with a publisher, server P1, that is, in turn, associated with a proxy server 52. The server 50, known hereinafter as a publisher server (P1) corresponding to a first publisher (P1), and its associated proxy server 52, define an entity known as a publisher, for example, Publisher 1 (P1), as per the broken line box 55. Publisher 1 (P1) 55 is representative of the multiple publishers that may be part of the system 20. The Publisher Server (P1) 50 and the proxy server 52 are typically controlled by the same entity, but may also be controlled by different entities.

While various servers have been listed, this is exemplary only, as the present disclosed subject matter can be performed on an endless numbers of servers and associated components that are in some way linked to a network, such as the Internet 24. Additionally, all of the aforementioned servers include components for accommodating various server functions, in hardware, software, or combinations thereof, and typically include storage media, either therein or associated therewith. Also in this document, the aforementioned servers, storage media, and components can be linked to each other or to a network, such as the Internet 24, either directly or indirectly.

The home server (HS) 30 is of an architecture that includes one or more components, modules and the like, for providing numerous additional server functions and operations, for example, comparison and matching functions, policy and/or rules processing, various search and other operational engines, browser directing and redirecting functions, and the like. The home server (HS) 30 includes various processors, including microprocessors, for performing the server functions and operations detailed herein, and storage media, either internal or associated therewith, such as caches 43a-43n. While these caches 43a-43n are shown, this is for explanation purposes, as the home server (HS) 30 may be associated with additional caches, databases, as well as numerous other additional storage media, both internal and external thereto. For explanation purposes, the home server (HS) 30 may have a uniform resource locator (URL) of, for example, <u>www.homeserver.com</u>.

This home server (HS) 30 may employ a search engine, or link to one (in another server or the like via the Internet 24), in order to direct the received request, data, including keywords, key word identifiers, or the like, to the most suitable content server (CS) 34a-34n. While a single home server (HS) 30 is shown, the home server (HS) 30 may be formed of multiple servers and/or components.

The E-mail API server 32 may include one or more components, modules or the like, and may be one or more servers, but is shown for description purposes as a single server. The e-mail API server 32 is of an architecture for receiving md5s (e-mail addresses as hashed by the md5 algorithm, each hashed e-mail address referred to hereinafter as an "md5"), and includes programs for assigning a creative (in code, data or the like, in the cache 32b) to the md5, by any one of numerous methods, and returns, data for the creative, for example, the data including HTML code, as an image request to the publisher server (P1) 50. The e-mail API server 32 architecture also supports programs for data generation that is sent to the publisher server (P1) 50, as well as for electronic communication with the home server (HS) 30 and imaging server (IS) 38.

The e-mail API server 32 includes various processors, including microprocessors, for performing the aforementioned server functions and operations and storage media, either internal or associated therewith, and caches. A first cache 32a for md5s associated with the cryptographically hashed e-mail addresses received of md5s for recipients (users) who responded to creatives associated with this entity 39. There is a second cache 32b with HTML for the various creatives in the imaging server (IS) 38. A third cache 32c is for target campaigns for non-responder md5s. A fourth cache 32d is for target campaigns for responder md5s, and a fifth cache 32e is for optimized responder campaigns, for the target campaigns for the md5 responders. Other caches, databases, as well as numerous other additional storage media, both internal and external thereto, for numerous functions may also be part of the e-mail API server 32, and are designated 32n.

Content servers (CS) 34a-34n (one or more) are also linked to the Internet 24. The content servers (CS) 34a-34n provide content, for example, in text form, for the imaging server (IS) 38, typically through the home server (HS) 30 (for example, as data, code or the like from an image link returned to the home server (HS) 30, as detailed below), and, for example, in response to a request from the home server (HS) 30, as detailed below. These content servers (CS) 34a-34n may be, for example, Pay-Per-Click (PPC) servers of various content providers, such as internal providers, or external providers, for example, Overture Services, Inc. or Findwhat, Inc.

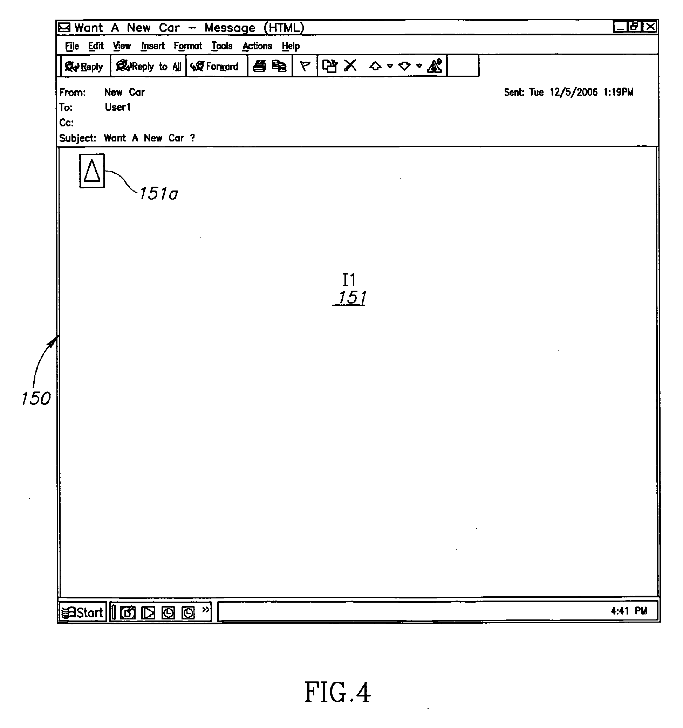

At least one imaging server (IS) 38 is linked to the Internet 24. The imaging server (IS) 38, representative of all imaging servers, functions to convert text (data in text format) from the home server (HS) 30, to an image (data in an image format). After the text is converted into an image, corresponding to the creative and the images covering the "hot spots" of the creative (collectively, "the creative") (for example, in HTML code, from the e-mail API server 32), the image (for example, formed of multiple images to accommodate the "hot spots" as well) is typically sent back to the home server (HS) 30, and sent to a recipient server, for example, the proxy server 52, that sends the image to fill the template 150 (Fig. 4), once the e-mail is opened by user 41a, as detailed below. The imaging server (IS) 38 may store the requisite images corresponding to the data or code in the cache 32b (for example, placed into the requisite image links as detailed below) including all code, data and the like for all of the images associated with the creative, such as the main image for the body of the creative that include the hot spots and sub images that cover the hot spots (as detailed below), in the server itself, or storage devices or other servers linked to the imaging server (IS) 38. For explanation purposes, all devices and servers associated with storage of data to produce the requisite images in the electronic communications detailed herein, as represented by the imaging server (IS) 38.

The publisher server (P1) 50 may be one or more servers, components or the like, but is shown for description purposes as a single server. The publisher server (P1) 50 is of an architecture that includes databases 50a, 50b. For example, one database 50a stores one or more lists 50a' of e-mail addresses of recipients or users 56a-56n. Another database 50b stores and maps e-mail addresses from the aforementioned lists 50a' to their corresponding cryptographically hashed e-mail addresses by the md5 algorithm (md5s).

The publisher server (P1) 50 includes software and hardware allowing it to function as a mail (e-mail) transfer agent (MTA). The mail transfer agent (MTA) is shown, for example, as a module 50' within the publisher server (P1) 50, but may be on a separate server or a separate component. The publisher server (P1) 50 and the mail transfer agent module 50' are configurable to work with numerous types of e-mail clients, associated with various intended recipients (users), such as America Online® (AOL®), Eudora®, Outlook®, and other web-based clients.

The publisher server (P1) 50 includes programs for cryptographically hashing the aforementioned e-mail addresses of users 56a-56n (from the list 50a') through the md5 algorithm, and sending the md5 corresponding to the e-mail address, to the e-mail API server 32. There is also software, hardware and combinations thereof for receiving the code of a creative from the e-mail API server 32, along with additional data, coordinating it with an e-mail address from a list 50a', and adding a header and footer to this acquired data, to create an electronic communication, for example, in the form of an e-mail. The e-mail is sent from the mail transfer agent (MTA) module 50' to the intended recipient, for example, user 41a at the e-mail address user1@xyz.com, typically directly, but may be through the proxy server 52.

The publisher server (P1) 50 includes various processors, including microprocessors, for performing the aforementioned server functions and operations and storage media, either internal or associated therewith, as well as other server operations. Also, for explanation purposes, the Publisher Server (P1) 50 may have a uniform resource locator (URL) of, for example, www.P1server.com. The publisher server (P1) 50 is also typically electronically linked internally within the publisher entity 55 to the proxy server 52.

The proxy server 52 may be one or more servers, components or the like, but is shown for description purposes as a single server. The proxy server 52 is of an architecture that includes software, hardware, and the like for sending and receiving e-mail, receiving and sending image requests, and receiving and sending data to fill templates of opened e-mails. The proxy server 52 includes software and hardware allowing it to function as a mail (e-mail) transfer agent. The proxy server 52 is also programmable for static configurations, for example, to send requests received from users (from opened e-mails) to the home server (HS) 30 (as detailed below), and may also be programmed to be mapped to the home server (HS) 30 or other desired servers, components and the like.

The proxy server 52 includes various processors, including microprocessors, for performing the server functions and operations detailed herein and storage media, either internal or associated therewith, as well as other server operations. Also, for explanation purposes, the proxy server 52 may have a uniform resource locator (URL) of, for example, www.P1proxyserver.com.

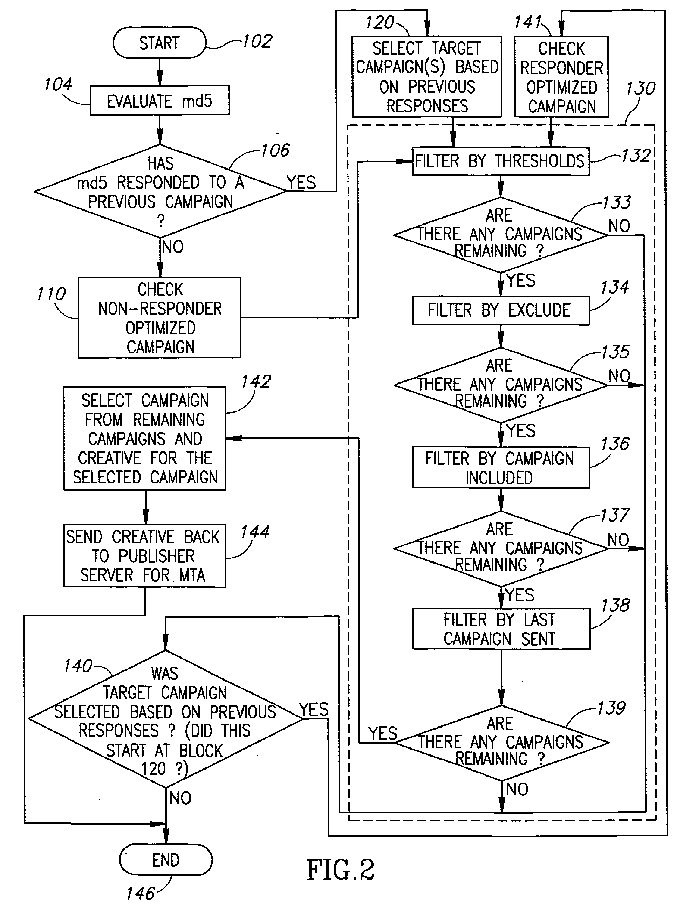

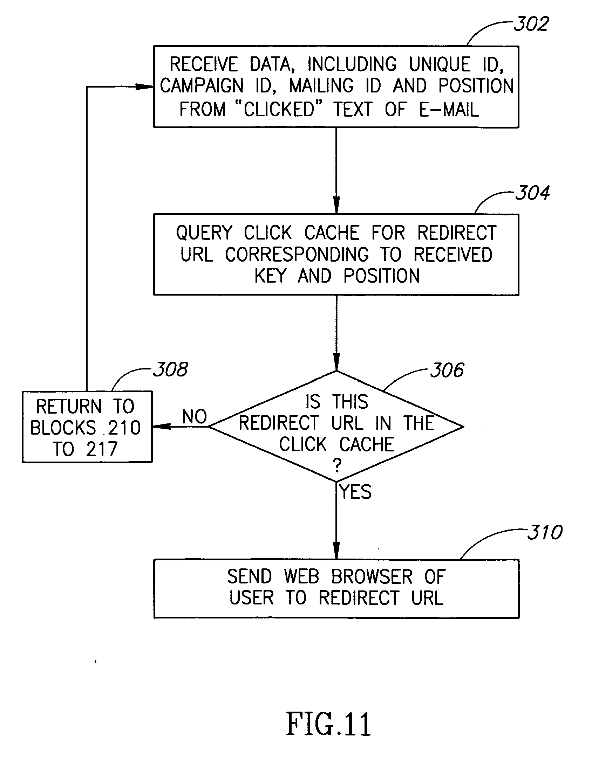

Turning also to FIG. 2, an exemplary implementation of a process in accordance with an embodiment of the disclosed subject matter will now be described. FIG. 2 is flow diagram of the process (method), for selecting the contents of the communication that the publisher 55 will send to the intended recipient (user), for example, user 41a. The process of FIG. 2 may be the first phase of a larger process. For example, the first phase may involve selecting a creative to be placed into an e-mail. In another phase, the e-mail is rendered to an e-mail client, by the publisher 55, as shown in FIG. 11 and detailed below. In another phase, the browsing application of the e-mail recipient or user is directed to a target web site, via a link, that is activated once the user 41a has clicked his mouse 41b on a portion of the image covering the dynamically rendered link, of the creative, that appeared on the screen display of the user 41a when the e-mail was opened.

Initially, the computer 41b of the user 41a includes an e-mail client (detailed above), installed thereon, that provides the user with a unique address and the ability to utilize one or more e-mail addresses. For example, the user 41a has an e-mail address, user1@xyz.com, through which he receives his e-mail from the domain server 40 that hosts the domain xyz.com, of which the user 41a is a member. The computer 41b also includes a web browser, browsing software, application, or the like, to access web sites or web pages from various servers and the like, on the Internet 24. Some exemplary web browsers/web browsing software include Internet Explorer®, from Microsoft, Redmond, Wash., and Netscape® Navigator®.

Prior to the START, at block 102, typically within the publisher entity 55, the Publisher Server (P1) 50 pulls e-mails addresses from lists, for example, the list 50a', stored in databases, for example, the database 50a. For example, the e-mail address of user1@xyz.com has been pulled from the list 50a' from the database 50a. This pulling of the e-mail address is representative of actual operation for multiple e-mails pulled from one or more lists in one or more databases, by one or more publishers. The e-mail address, userl@xyz.com, is cryptographically hashed via the md5 algorithm in the publisher server (P1) 50, with data corresponding to the cryptographically hashed e-mail referred to hereinafter as an "md5." The e-mail with the corresponding md5 is, for example, stored in the hash storage database 50b.

The publisher server (P1) 50 sends the md5 along with, data including, for example, an assigned image domain, for example, "www.plproxyserver.com", a click domain, for example, "www.plproxyserver.com", a list identifier, for example, "280", the domain of the e-mail address, for example, "xyz.com", and a threshold value, indicated as "level", for example, "8", to the e-mail API Server 32. This data is typically submitted as a string, for example, the string as follows:

```
<?xml version="1.0" encoding="UTF-8"?>
  <request>
    <email>
    <recipient>57e8c0b0ef702ab4eee91a644cdc51f5</recipie
nt>
        <list>280</list>
        <domain>xyz.com</domain>
        <level>8</level>
    </email>
  </request>
```

This data from the publisher server (P1) 50 is now received in the e-mail API server 32, and the process of selecting and returning a creative for the particular user, whose e-mail address corresponds to the md5, begins, at block 104.

The received md5 is compared against md5's of previous responders, stored in the cache 32a, in an evaluation process of block 104. It is then determined if this md5 was a previous responder, at block 106. This determination is made, for example, by checking the md5 against a cache, for example Responders Cache 32a, of previously received and stored md5s.

If this md5 is not matched with the md5 of a previous responder, the md5 is treated as a non-responder, and the process moves to block 110. In the process at block 110, the non-responder database 32b is checked for campaigns suitable for this non-responder md5. A campaign is selected for the non-responder md5, typically by selecting the "active" campaign among rotating campaigns (with each campaign of the rotating campaigns being "active" at predetermined intervals). The selected campaign is then subjected to filtration, at block 130, shown in broken lines.

Returning to block 106, if the md5 matches a previous responder md5, the process moves to block 120, where one or more target campaigns are selected based on the previous campaigns sent to the md5 responder. This target campaign(s) may be determined by numerous methods, for example, a rotating method of preprogrammed campaigns based on the previously responded to campaign(s), by the user, whose e-mail address corresponds to the md5. Alternately, a campaign for the user, whose e-mail corresponds to the md5 may be selected in accordance with one or more of the processes detailed in U.S. Patent Application Serial No. 11/774,066, entitled: System And Method For Behaviorally Targeting Electronic Communications, filed on July 6, 2007.

With the campaigns now selected, non-responder optimized campaigns from block 110 or target campaigns form block 120 they are subjected to filtration, at block 130. The filtration process is shown in broken lines.

The filtration process of block 130 is now described. The filtration process of block 130 includes four sub-processes 132, 134, 136, 138. The filtration process of block 130 is, for example, controlled by the system administrator and may employ one or more of the sub processes 132, 134, 136, 138 in any combination and/or order.

For example, a first sub process at block 132 is filtration by thresholds. A threshold is a value provided by the publisher in the data sent to the e-mail API server 32, with the md5. These threshold values correspond to the levels in the API server 32 for the selected set of campaigns for the particular responder, in accordance with an identical scale used by the system administrators associated with the respective publisher servers, for example, server P1 50 and the e-mail API server 32. The process moves to block 133 to determine if there are any campaigns that meet the threshold. This determination is based on there being at least one campaign that meets or exceeds the threshold.

If there is not a campaign that meets or exceeds the threshold, the process moves to block 140, as detailed below. If there is at least one campaign that meets or exceeds the threshold, the process moves to block 134.

Block 134 involves filtration by exclusion. Excluded campaigns are campaigns specifically preprogrammed not to be sent to the particular md5 being evaluated. It is then determined, at block 135 if there are any campaigns left as a result of the filtration by exclusion. It there are not any campaigns left after filtration by exclusion, the process moves to block 140, as detailed below. If there is at least one campaign remaining, the process moves to block 136.

Block 136 involves filtration by inclusion. Included campaigns are campaigns specifically preprogrammed that the md5 being evaluated may receive. It is then determined, at block 137 if there are any campaigns left as a result of the filtration by inclusion. It there are not any campaigns left after filtration by inclusion, the process moves to block 140, as detailed below. If there is at least one campaign remaining, the process moves to block 138.

Block 138 involves filtration by the last campaign sent to the md5 being evaluated. This filtration step avoids the same campaign being sent twice to the particular md5, and in particular, the user associated with the e-mail address associated with the md5. If the campaign to be sent is the same as the previous campaign designated to be sent to that particular md5, the campaign will not be sent. The process moves to block 139, where it is then determined, if there are any campaigns left as a result of the filtration by last sent campaign.

Moving from block 139, and also returning to blocks 133, 135 and 137, if there are not any remaining campaigns, the process moves to block 140. At block 140, it is determined whether this responder entered the filtration process of block 130 with targeted campaigns selected based on previous responses (did the process start at block 120). If yes at block 140, the process moves to block 141, where the responder optimized database 32c is checked to determine the responder campaigns. These responder campaigns are typically one or more campaigns predetermined for predetermined random responders according to programs or simply random. Once such campaigns are obtained, the process returns to block 130, and continues as detailed above. If no to block 140, the process moves to block 146, where it ends.

If there is at least one campaign remaining at block 139, the process moves to block 142. At block 142, a campaign is selected from the remaining campaigns. For example, this could be a previously ordered or random campaign selected manually or by a program in the system. It could also be the campaign with the highest rank as per the process disclosed in U.S. Patent Application Serial No. 11/774,066. Also within block 142 a creative for the campaign is selected. This creative is for example, the active creative, for example, selected on a rotating basis, from each creative of the series of creatives being active at predetermined intervals. Alternately, any other selection method for the creative is also suitable.

The process moves to block 144, where data for the creative, along with other data, is sent back to the publisher server (P1) 50. The process ends at block 146 until the next md5 is received in the e-mail API server 32.

Turning back to block 144 in detail, data, for example, in the form of a data string, that, for example, includes data for the selected creative, as well as additional data, is sent back to the publisher (P1) server 50. The data for the creative includes one or more click links and image links. The click link(s) are for example, addresses of the proxy server 52 of the publisher 55 and the image links are used to obtain the creative. The image links also serve as the "requests", discussed below. The click links and image link include embedded data read by the servers or components, for example, the home server (HS) 30, that provide the images for the creative (main image and images for the hot spots of the main image, via the imaging server (IS) 38), activatable links for the hot spots, and data for redirecting the browser or browsing application of the intended recipient (user) of the electronic communication to a URL corresponding to the activatable link of the requisite hot spot, once the activatable link has been activated or clicked.

The additional data includes the md5 (md5 hash of the intended recipient's e-mail address), that serves as a unique identifier (UID), a list identifier, indicative of the list from the particular publisher from which the md5 is based, a mailing identifier (MID), a campaign identifier (CID) and a creative identifier (CCID). This data is utilized by the publisher server (P1) 50 to place the image link and click links for the requisite creative into the correct electronic communication, for example, the requisite e-mail for the intended recipient (user).

The data representative of the requisite creative for the requisite intended recipient (user) (for the selected campaign), for example, a string, is as follows:

```
<?xml version="1.0" encoding="UTF-8"?>
<result>
<email>
<recipient>57e8c0b0ef702ab4eee91a644cdc51f5</recipient>
<list>280</list>
<creative>
<dname><![CDATA[New Car]]></dname>
<from><![CDATA[Newcar]]></from>
<subject><![CDATA[Want a New Car?]]></subject>
<body><![CDATA[<imgsrc="http://plproxyserver.com/ai/Y21kPTE
wMTkxJnF0PTQmaW09MSZ1PTU3ZThjMGIwZWY3MDJhYjRlZWU5MWE2NDRjZG
M1MWY1Jm09MTAwMDAmbGlkPTI4MCZzaT0zJmNoPWh0dHAlM0ElMkYlMkZke
W4uYWsyLmNjJTJGb2MlMkYxMDElMkYxMDE5MSUyRnF0Y2gmZG49b3RoZXIm
Y2w9OX1r0JDr_EzeQ0ujNbp7Plc" border="0" usemap="#x">
<map name="x">
<area coords="240,167,528,290"
href="http://plproxyserver.com/ac/Y2lkPTEwMTkxJmltPTEmdT01N
2U4YzBiMGVmNzAyYWI0ZWVl0TFhNjQ0Y2RjNTFmNSZtPTEwMDAwJmxpZD0y
ODAmc2k9MyZkbj1vdGhlciZjbD05JbVupPutGlG1-DLJLeaCrQ">
<area coords="238,335,526,450"
href="http://p1proxyserver.com/ac/Y2lkPTEwMTkxJmltPTlmdT01N
2U4YzBiMGVmNzAyYWI0ZWVl0TFhNjQ0Y2RjNTFmNSZtPTEwMDAwJmxpZD0y
ODAmc2k9MyZkbj1vdGhlciZjbD05TetWeCXIF09gCJ2KpkB2wQ">
</map>
]]></body>
</creative>
```

In this string, going from top to bottom, the <recipient> is the unique identifier, and includes the md5 hash of the email address (md5). The list identifier is represented by the <list>, and specifically, the list is "list 280" from publisher P1.

The actual creative is represented by <creative>, and is formed of multiple segments. The segment indicated by <dname> is the display name for the "From" line in the e-mail that is sent by the publisher to the intended recipient with this returned string. The segment indicated by <from> is the user name for the "From" line of the e-mail that is sent by the publisher to the intended recipient with this returned string. The segment <subject> is the "Subject" line of the e-mail that is sent by the publisher to the intended recipient with this returned string.

The <body> is the content for the creative that has been determined for the particular recipient (user). It is for example, in two parts, the image link, and one or more click links (depending on the number of "hot spots" to be filled in the creative, corresponding to the image link, as detailed below). The aforementioned data is the additional data that accompanies the image link and the click link(s) in the data string.

The image link is represented, for example, by the line:

```
<imgsrc="http://p1proxyserver.com/ai/Y2lkPTEwMTkxJnF0PTQmaW
09MSZ1PTU3ZThjMGIwZWY3MDJhYjRlZWU5MWE2NDRjZGM1MWY1Jm09MTAwM
DAmbGlkPTI4MCZzaT0zJmNoPWh0dHAlM0ElMkYlMkZkeW4uYWsyLmNjJTJG
b2MlMkYxMDElMkYxMDE5MSUyRnF0Y2gmZG49b3RoZXImY2w9OX1r0JDr_Ez
eQ0ujNbp7Plc" border="0" usemap="#x">
```

This image link is encoded to include the image source, for example, the imaging server 38, as indicated by the address "p1proxyserver.com.", for the proxy server 52, that is mapped to the home server (HS) 30, indicated by "ai" in the image link. The home server (HS) 30 is mapped to the imaging server (IS) 38 to pull the images for the creative, for example, the main image (that includes locations corresponding to the hot spots) and the images, also known as sub-images, for the hot spots, detailed below. The image link includes the number of listings (N) as a listing count, and reference to the locations of the positions for the hot spots (and the links obtained from the listings that are placed into the hot spots) inside the creative. For example, if there two positions inside the creative (for example, corresponding to two click links), the position data (POS) would be such that the positions are represented by POS=1 and POS=2.

The click links, for example, the two click links are represented, as follows, for example, the first click link:

```
href="http://plproxyserver.com/ac/Y2lkPTEwMTkxJmltPTEmdT01N
2U4YzBiMGVmNzAyYWI0ZWVlOTFhNjQ0Y2RjNTFmNSZtPTEwMDAwJmxpZD0y
ODAmc2k9MyZkbj1vdGhlciZjbD05JbVupPutGlG1-DLJLeaCrQ">
```

for the first position POS=1 in the creative; and, the second click link:

```
href="http://p1proxyserver.com/ac/Y2lkPTEwMTkxJmltPTImdT01N
2U4YzBiMGVmNzAyYWI0ZWVlOTFhNjQ0Y2RjNTFmNSZtPTEwMDAwJmxpZD0y
ODAmc2k9MyZkbj1vdGhlciZjbD05TetWeCXIF09gCJ2KpkB2wQ">
```

for the second position POS=2 in the creative.

The click links provide an internet protocol address for directing the HTTP request.

The unique identifier (UID), for example, the md5 of the recipient (user), mailing identifier (MID), campaign identifier (CID) and creative identifier (CCID) are embedded as code into the respective image link and click links. The click links also include position data (POS) for their respective positions in the creative (as defined by the hot spots). For exemplary purposes, the unique identifier (UID) is, for example, "57e . . .51f5", the mailing identifier (MID) is, for example, "1000," the campaign identifier (CID) is, for example, "10191", while the creative identifier (CCID) is, for example, "15398". The mailing identifier (MID), campaign identifier (CID) and creative identifier (CCID) are typically not used by the publisher, but are used by the entity providing the creative and providing the content thereto (for example, the entity that controls the home server (HS) 30, e-mail API Server 32 and/or imaging server 38). The aforementioned identifiers are used in combination with other data to process the request and redirect the browser of the intended recipient (the user), when they activate one of the links of the creative, upon opening their e-mail, as detailed below.

Once this data is received in the publisher server (P1) 50, the md5 is converted to an e-mail address by virtue of the md5 being mapped back to the e-mail address in the hash database 50b of the publisher (P1) server. A header and footer is placed onto this received data, i.e., the data string, by the publisher, for example, the publisher (P1), at the publisher server (P1) 50. The e-mail address of the intended recipient is obtained from the hash database 50b, as the md5 is mapped back to the e-mail address of the intended recipient (user). The packaged data, including the header, footer and the data string is now an electronic communication, and is sent from the MTA module 50' as, for example, an e-mail to the intended recipient, for example, the intended recipient, such as, the user 41a, at the e-mail address user1@xyz.com.

The data placed into the e-mail also includes a program that provides the body of the e-mail when the e-mail is opened. The program provides a template 150 (FIG. 4), that forms the basic structure or framework for the image(s) of the opened e-mail, and, zero or more HTTP Source requests for zero or more static images. The sent e-mail may also include HTML constructs and text, such as plain text, HTML headers, list constructs and the like.

The unique identifier (UID) is, for example, the md5 hash (md5) corresponding to the e-mail of the intended recipient, as per the publisher, from the list 50a' of the publisher. This md5 guarantees uniqueness for the particular received request(s).

The mailing identifier (MID) is a sequence of characters indicative of the batch from which the particular creative was sent. For example, a mailing identifier may be a sequence of numbers.

The position data is data indicative of the location in the creative of the "hot spots" where activatable locations (images within the main image) that cover activatable links, are placed dynamically into these positions in the creative. By dynamically, it is meant that the activatable links are placed into the "hot spots" at the time the e-mail is opened, as detailed below. The number of hot spots or activatable links in a creative is represented by N, with the number of hot spots or activatable links in the creative being code embedded in the image link, and the number of click links, as detailed above.

These activatable locations cover the activatable links, that when activated or "clicked" on, will ultimately redirect the browser or browsing application associated with the intended recipient, to a target web site, for example, a web site hosted fully or partially by a third party server (TPS) 42a-42n, associated with the requisite link. The position data is represented by "POS" and a creative with two positions or "hot spots" includes two positions, POS=1 and POS=2. These two positions result in a Max Number or listing count (N) being equal to "2", corresponding to the two positions for links, as the creative includes two "hot spots."

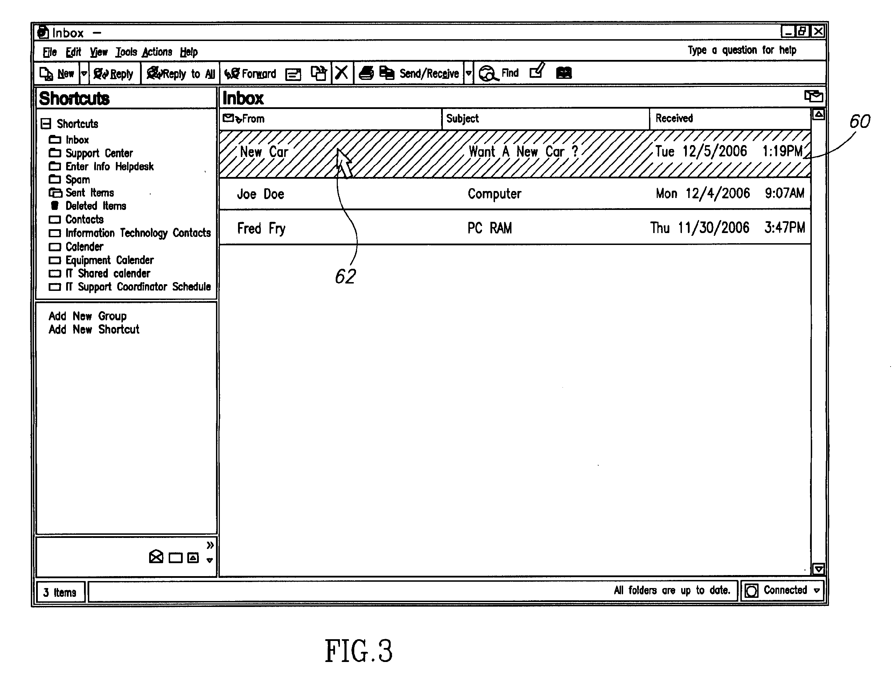

An e-mail is now sent by the MTA module 50' of the publisher server (P1) 50, to the intended recipient, for example, the user 41b, with the e-mail address user1@xyz.com. This initially or first sent e-mail, for explanation purposes, is referred to as the "sent e-mail." The sent e-mail is received in the intended recipient's or user's mail box, as shown in Fig. 3, as a text line 60.

When the e-mail (the sent e-mail) is downloaded by the e-mail client of the user 41a, the e-mail client opens a connection or "pipe" to the Proxy Server 52, by virtue of being mapped thereto. The e-mail client associated with the computer 41b of the user 41a, pulls data from the Proxy Server 52, and may pull data asynchronously. The data pulled from the Proxy Server 52 includes data required to display the resultant creative (in the form of images), for example, a template 150, in the image area I1 151, as shown in Fig. 4. The representation of the image for the creative is the box 151a

The user 41a opens this e-mail, typically by clicking the mouse 41c (of the computer 41b), as shown by the arrow 62, anywhere along the line 60, that represents the sent e-mail as received in the user's mail box, as shown in Fig. 3. This opening, for purposes of explanation herein, occurs at a time indicated as $t_1$. The e-mail client, associated with the e-mail address of the intended recipient or user, i.e., user1@ xyz.com, pulls data from the home server (HS) 30, through the proxy server 52. This pulling of data by the e-mail client is continuous, as long as the request is being processed, as described below.

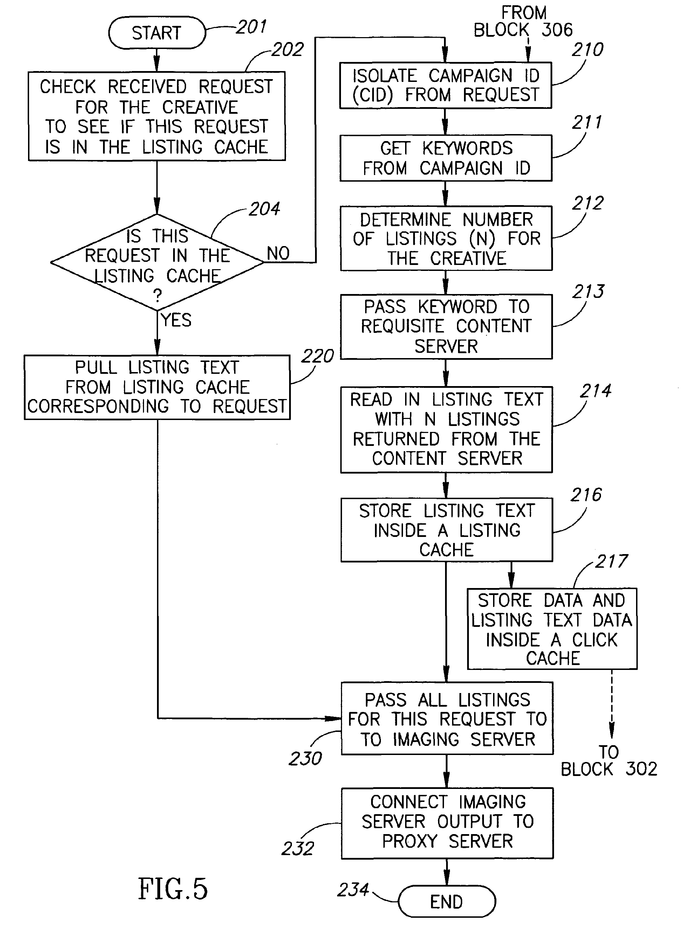

There is now a connection or "pipe" opened between the user's computer 41b and the proxy server 52, and the home server (HS) 30, as the proxy server 52 maps to the home server (HS) 30, as per the image link of the creative, detailed above. The proxy server 52 receives the request, which is, for example, the image link associated with the creative, and passes the request to home server (HS) 30. The proxy server 52 is preprogrammed to send requests received from users onward to the home server (HS) 30. With the request received in the home server (HS) 30, the creative corresponding to the creative identifier (CCID) in the image link is extracted and the data for the corresponding image (for example, the main image for the creative that includes the locations for the hot spots) is pulled from the imaging server (IS) 38, where its image data is stored, and is sent back to the proxy server 52. The data for the image is sent onward to the e-mail client for placement into the template 150 in the image location I1 151 in replacement of the box 151a, as shown in Fig. 4. The process of processing the request, as shown in Fig. 5, begins.

Turning to flow diagram of Fig. 5, the process is shown for processing received requests. The process begins at the start 201, typically, the request being received in the home server (HS) 30, as sent or pushed to it by the proxy server 52. In this process, requests are processed one at a time, on a "first in" basis. Each request, for example, a single request from each intended recipient, received upon the opening of the e-mail, is cataloged in the request cache 43b, for example, for tracking purposes, by the entity providing the content of the e-mail (for example, the entity associated with the home server (HS) 30, e-mail API server 32, and/or the imaging server 38).

Initially, the home server (HS) 30, upon receiving the request, at block 202, checks the received request to determine if the request has generated listings in the listing cache 43c. It is then determined if the request is in the listing cache 43c, at block 204.

The checking is performed as the home server (HS) 30 extracts the unique identifier (UID), for example, the md5, the campaign identifier (CID), and the mailing identifier (MID), from the image link of the received data string. These three data components are grouped to define a key, in accordance with the rules and policies of the home server (HS) 30. The key is queried against all keys in the key cache 43a for a match. Matching keys may be of identical or similar keys, in accordance with predetermined rules and/or policies programmed into the component(s) of the home server (HS) 30.

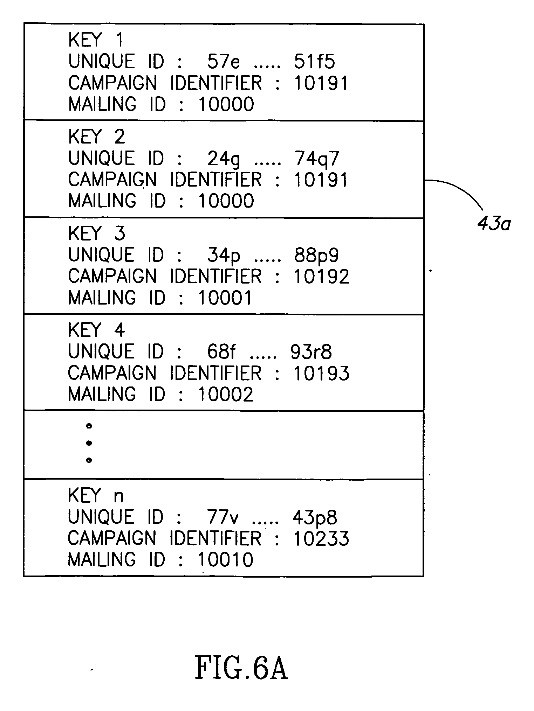

If a matching key is not found, this request has not been processed, and the process moves to block 210. Additionally, the unique identifier (UID) plus the campaign identifier (CID) and the mailing identifier (MID) becomes a key and is stored in the cache 43a, as shown, for example, in FIG. 6A.

If a matching key is found, the listing cache 43c is searched for that key, to see if the key is in the listing cache 43c, with listings having been pulled for that key. If the key is not found in the listing cache, or found without listings, the process also moves to block 210.

Alternately, if the key is found with listings, the process moves to block 220. This is a non-typical occurrence, and takes place, for example, when the same recipient (user) opens the e-mail (line 62 in Fig. 3), another time, within a predetermined time. This predetermined time may be, for example, anywhere from the time the e-mail was initially opened to the time of a time out, for example, approximately five minutes after the initial opening and a creative does not appear on the screen of the user.

At block 220, the request has generated listings in the listing cache 43c. The listings form the listing text, with the number of listings in the listing text corresponding to positions for links in the "hot spots" of the creative. The number of positions in the creative for "hot spots" for supporting images with underlying links, is determined from the image link for the creative from the returned data string, as detailed above. The listings are subsequently pulled from the listing cache 43c, to be passed (sent) to the imaging server (IS) 38, at block 230, detailed below.

As shown in FIG. 6A, keys in an example key cache 43a are indicated as KEY 1 to KEY 4. Each key is unique to each opened e-mail for a particular recipient (user), in accordance with the time each e-mail was opened. For, example, KEY 1 includes the md5 "57e ... 51f5", that is the unique identifier (UID), the campaign identifier (CID) is 10191, and the mailing identifier (MID) is 10000. KEY 2 through KEY n are formed of the same components, the md5, as the unique identifier (UID), the campaign identifier (CID) and the Mailing Identifier (MID).

Turning to block 210, the request being processed was determined not to be in the listing cache. The campaign identifier (CID) associated and sent with the request is isolated. The campaign identifier (CID) is typically in the form of alphanumeric data. At block 211, the campaign identifier is matched with a corresponding campaign in a cache 43e, in order to obtain the requisite keyword, from which one or more listings will be obtained.

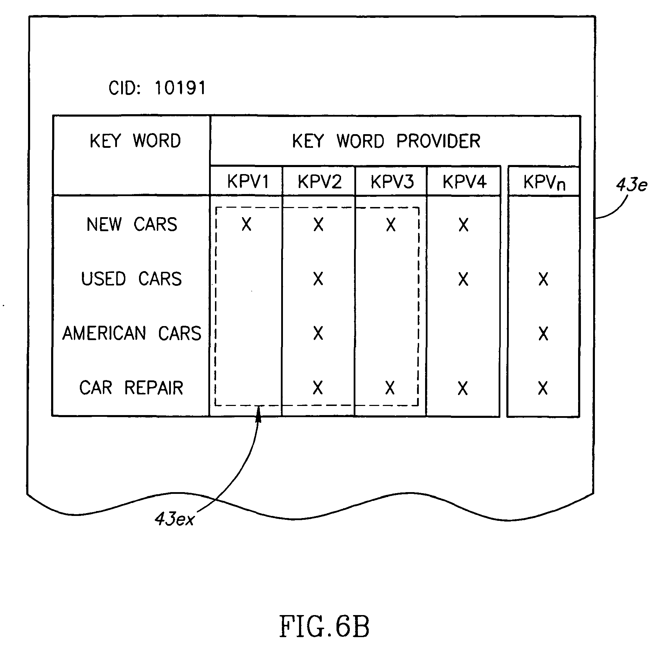

An exemplary cache shown 43e in Fig. 6B. Within the cache 43e, each campaign, as indicated by the requisite campaign identifier (CID), is associated with one or more keywords (data representative of one or more keywords). Each keyword is also associated with a keyword provider (KPV). For example, for the Campaign Identifier (CID) 10191, an automobile or car campaign, there are "n" keyword providers KPV1-KPVn, that will have coverage of the key words for this campaign. If a keyword provider has listings (inventory) for a key word, this is indicated with an "x" in the rows for each keyword provider. Each keyword provider (KPV) may be, for example, an entity that is associated with its own content server (CS) 34a-34n or servers.

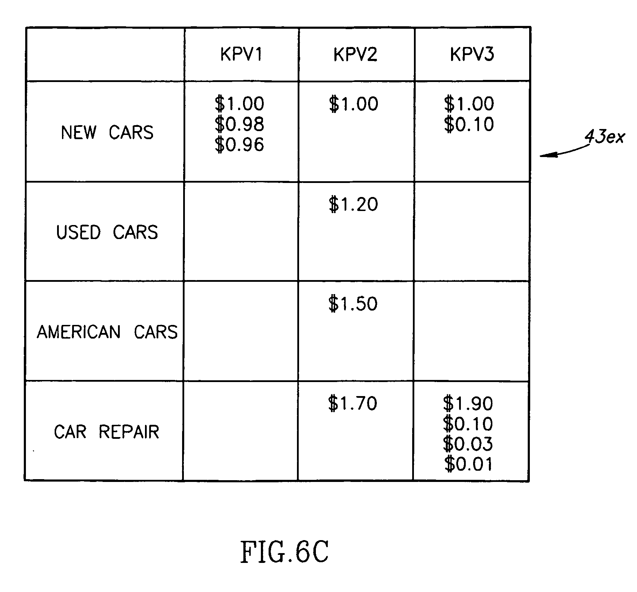

Remaining in block 211, a keyword is selected based on the keyword and the keyword providers. Initially, a random sample of keywords and keyword providers is selected, the random sample represented by the broken line box 43ex in Fig. 6B. The random sample 43ex is shown in Fig. 6C, where in each block, representing a keyword and a keyword provider (KPV), there are monetary amounts corresponding to bids for each listing in the inventory of the particular key word provider. The bids are, for example, PPC amounts presently bid for the keyword so that the listing, if selected, will result in a payment for the indicated amount if placed into the opened electronic communication and activated or "clicked" (resulting in the user's browsing application being directed to the target web site associated with the activated listing). The keyword may be an actual keyword, or a keyword group identifier.

The keyword/keyword provider is then determined, by one or more criteria. One example criteria is keyword depth, which will now be described, with other criteria including highest bid amount, most bid amounts and random also permissible. Depending on the number of listings required for the particular application, for example, a creative, listings may be taken from single or multiple keyword providers.

For example, depth is determined by the number of listings returned for a single keyword, with the listings averaged. By selecting based on depth, for example, the greatest amount of revenue will likely occur in the event the party associated with the target web site associated with the listing, corresponding to the bid, may have run out of budget, changed bids or ended the requisite campaign. With a rule requiring at least two bids, as the application, for example, requires two listings, three keyword/keyword providers are possible. These include the keyword "NEW CARS" from KPV1 and KPV3 and the keyword "CAR REPAIR" from KPV3. Averaging the bids NEW CARS-KPV1 = $0.98, NEW CARS-KPV3 = $0.55, and CAR REPAIR-KPV3 = $0.51. Accordingly, the keyword selected is "NEW CARS" and listings will be obtained from KPV1.

Alternately, for example, the average may be altered by an expected value (EV). The expected value is for each keyword from each keyword provider. It is determined based on the actual pay per click amount or average PPC amount (PCCA) for the generated listing for the keyword from the provider, multiplied by a revenue share (RS) between the keyword provider (KPV) and the system administrator, the party designated by the entity 39 that controls the servers 30, 32, 38, multiplied by a discrepancy factor (DF). The discrepancy factor (DF) is an assigned value from the system administrator, based on the keyword provider, and for example, its credit rating, payment history or the like.

The expected value (EV) is expressed as:

$$EV = PCCA \times RS \times DF$$

The keyword is translated into data, recognizable and usable by the requisite content servers (CS) 34a-34n. Continuing with the keyword being selected from Keyword Provider 1 (KPV1) based on depth, the process now moves to block 212. The keyword (data corresponding to the keyword) is read, and in accordance with the reading, it is passed to the designated content server (CS) associated with Keyword Provider 1 (KPV1), over the Internet 24.

The passing to the specific content server is typically in accordance with one or more rules, preprogrammed into the home server (HS) 30 or by a policy processor associated with the home server (HS) 30. The policies and/or rules are typically time-sensitive, to be applicable in real-time. For example, the keyword may be such that once read, the preprogrammed rules will be applied. The content server or servers (CS) associated with the requisite keyword provider, for example, KPV1, returns one or more listings for the designated keyword. The listings may be in a prioritized order, for example, based on pay per click, or random.

For example, the content server(s) corresponding to the selected keyword provider, here, for example, Keyword Provider 1 (KPV1), generates a listing text of N listings, from its inventory for the keyword NEW CARS. N is the number of "hot spots" for supporting activatable links in the creative. The number of listings "N" for the particular listing text is determined at block 213, by examining the image link for the selected creative, for example and look for the number of listings embedded in the image link, as read by the logic of the home server (HS) 30, that provides the number of listings (N), to be returned from the requisite content server 34a-34n, the N listings corresponding to the number of "hot spots" in the requisite creative.

The content server (CS) or servers 34a-34n, for example, content server (CS) or servers, that received the passed keyword (keyword data), is queried for acceptance of the keyword (keyword data), and returns a listing text to the home server (HS) 30. This listing text is read into the home server (HS) 30, with N listings, corresponding to the number of "hot spots" in the creative, at block 214. Data exchanges, between the home server (HS) 30 and the content server (CS) (representative of all content servers (CS) 34a-34n), are, for example, accomplished via Extensible Markup Language (XML).

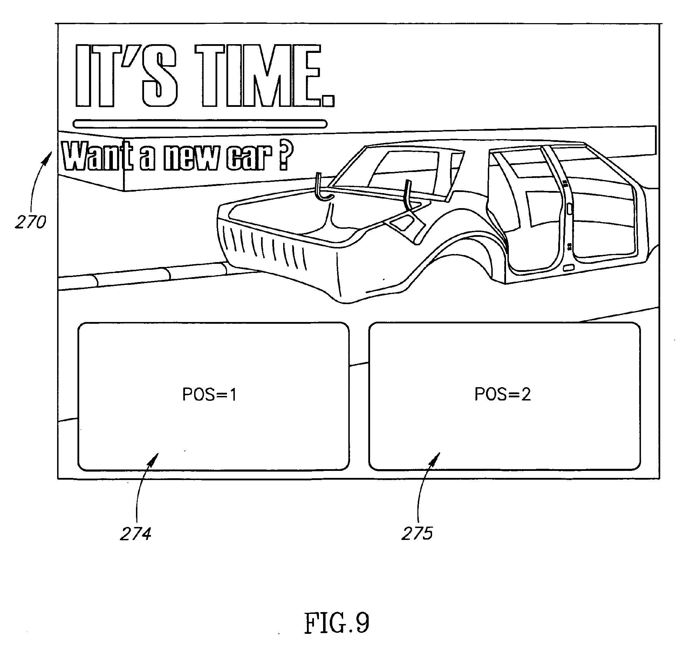

The listing text, that is returned to the home server (HS) 30 from the content server (CS), is assigned a particular key, corresponding to the new key created in the key cache 43a (as a result of a matching key not being found). The listing text typically includes the top "N" results, in the form of N listings, N being the total number of positions in creative, as determined from the image link associated with the selected creative. Each listing of the listing text for each key typically includes a title or headline for the content (e.g., the advertisement) to be returned to the e-mail client of the recipient user 40, at least one target uniform resource locator (URL) for one or more servers, such as third party servers (TPS) 42a-42n, and data for the content, typically in the form of listings, to be returned. The data for the creative to be returned includes data in text form and position data, indicating the location for the data in text form in the creative, that fills the hot spots 274, 275 in the creative 270 (the creative 270 representative of the main image or body of the creative), as shown in Fig. 9. The aforementioned portions of the listing text can be parsed, in accordance with the process being performed thereon.

The listing text is then stored in a cache, for example, the listing cache 43c, at block 216. The key assigned to the listing text, upon its being stored in the listing cache 43c, is linked to its corresponding key, typically in another cache, such as the key cache 43a.

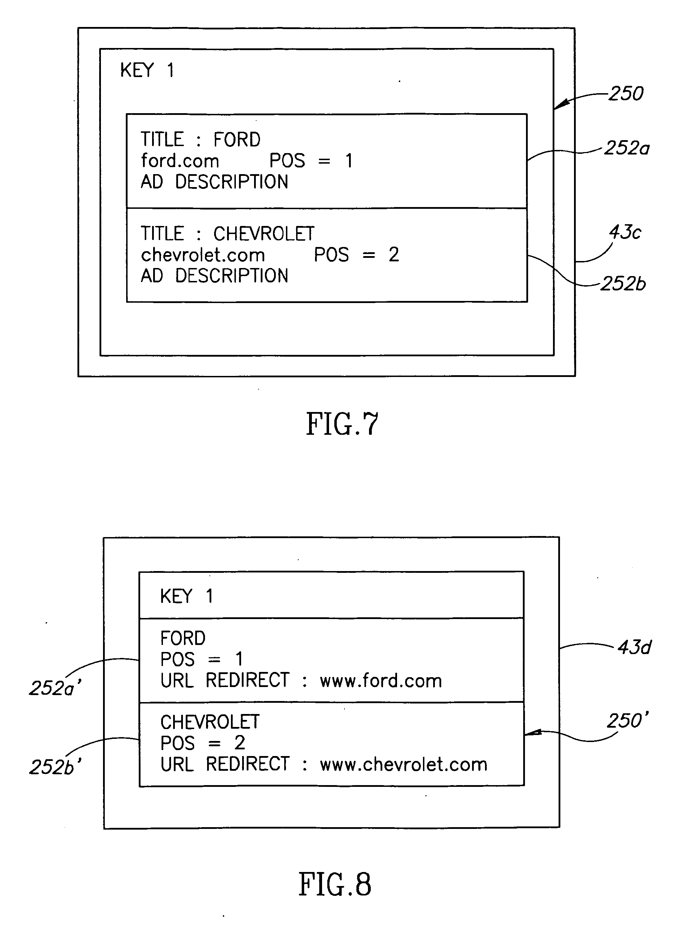

FIG. 7 shows an exemplary listing cache 43c, where a listing text 250 is stored therein. The listing text 250 includes a key, for example, KEY 1, formed of the unique identifier (UID), for example, an md5, the campaign identifier (CID), for example, "10191" and, the mailing identifier (MID), for example, "10000", as shown in FIG. 6 and detailed above, and two listings 252a, 252b, where N=2. Within each listing 252a, 252b is, for example, a title for a web site associated with the listing (for example, in listing 252a, the title is FORD), a URL for the web site associated with the listing (for example, in listing 252a, the URL is www.ford.com), position data indicating the location of the "hot spot" in the creative where the image with the link to the web site associated with the listing (for example, in listing 252a, the position data is, POS=1), and data for the body of the content to be returned is referenced as "AD DESCRIPTION". The AD DESCRIPTION is the text to be sent to the imaging server (IS) 38 with the TITLE, to be converted into the requisite image, for placement into the requisite "hot spot" of the creative at the requisite position. The listings 252a, 252b are typically placed into the listing text in an order of priority, here, for example, top to bottom or 252a, 252b. Additionally, by storing the listing text in the cache 43c with a unique key, a specific user, matched via the md5, will receive listings intended for him at the time he opened the e-mail (for example, should the user 41a at e-mail address user1@xyz.com, the time of opening the e-mail is time $t_1$).

Portions of the listing text are also stored in another cache, for example, a click cache 43d, at block 217. FIG. 8 shows an exemplary click cache 43d, where a listing text 250', corresponding to the listing text 250 of the listing cache 43c, is stored in the click cache 43d. The listing text 250' includes a key, identical to the corresponding key in the key cache 43a, as well as N, here, for example, two, listings 252a', 252b'. Each listing 252a', 252b' corresponds to the listings 252a, 252b of the listing text 250. Within each listing 252a', 252b' is, for example, a title for a web site associated with the listing (for example, FORD in the listing 252a'), a Redirect URL for the target web site associated with the listing (for example, www.ford.com, in the listing 252a'), and Position Data indicating the location of the "hot spot" for the resultant image and the underlying link in the creative. For example, position data in the listing 252a' is represented as POS=1, for placement of the link to direct a browsing application to the target web site at the designated first "hot spot" with POS=1 in the creative.

From block 216, the process moves to block 230, where the listing or listings, depending on the number of "hot spots" in the creative, are passed from the listing cache 43c of the home server (HS) 30 to the imaging server (IS) 38. This passing is typically over the Internet 24. The imaging server (IS) 38 typically processes the passed listings from the listing cache 43c on a FIFO (first in first out) basis, with the position numbers dictating the order of processing, for example, lowest to highest, POS=1 before POS=2, and so on.

The imaging server (IS) 38 receives the listing in a text format and sends it to the home server (HS) 30, for placement it into the creative (main image or body of the creative) 270 in accordance with the correspondingly numbered "hot spots", for example two "hot spots" 274, 275, for the positions (POS=1) 274 and (POS=2) 275. The creative 270, with its hot spots 274, 275, is shown diagrammatically in Fig. 9, although it is technically data until displayed on a computer monitor, screen display or the like. The "hot spots" are based on locations in the data of the image link (the request).

The creative, with its "hot spots" filled with underlying links, as well as images, also stored in the imaging server (IS) 38, the images placed into the hot spots 274, 275, either with the creative (also called up from the imaging server (IS) 38 as detailed above) or separate therefrom, is sent to the proxy server 52, via the home server (HS) 30, at block 232. The images that are placed over the hot spots include locations, activatable by a mouse click, or the like, that in turn activate links. The links are, for example, click links, planted in the hot spots, for example, hot spots 274, 275 of the creative (main image or body of the creative) 270 in such a way that makes the image, or a portion thereof, clickable (activatable by a mouse click) (Fig. 9). Each link (click link) includes an underlying URL for the proxy server 52 in a string with a unique identifier (UID) (e.g., md5), mailing identifier (MID), campaign identifier (CID), creative identifier (CCID), and position data (POS). An example string, for example, at POS=1 (the first position corresponding to the hot spot 274) may be as follows:

```
href="http://p1proxyserver.com/ac/Y21kPTEwMTkxJmltPTEmdT01N
2U4YzBiMGVmNzAyYWI0ZWVlOTFhNjQ0Y2RjNTFmNSZtPTEwMDAwJmxpZD0y
ODAmc2k9MyZkbj1vdGhlciZjbD05JbVupPutGlG1-DLJLeaCrQ">
```

and, for example, at POS=2 (the second position corresponding to the hot spot 275) may be as follows:

```
href="http://plproxyserver.com/ac/Y2lkPTEwMTkxJmltPTImdT01N
2U4YzBiMGVmNzAyYWI0ZWVlOTFhNjQ0Y2RjNTFmNSZtPTEwMDAwJmxpZD0y
ODAmc2k9MyZkbj1vdGhlciZjbD05TetWeCXIF09gCJ2KpkB2wQ">
```

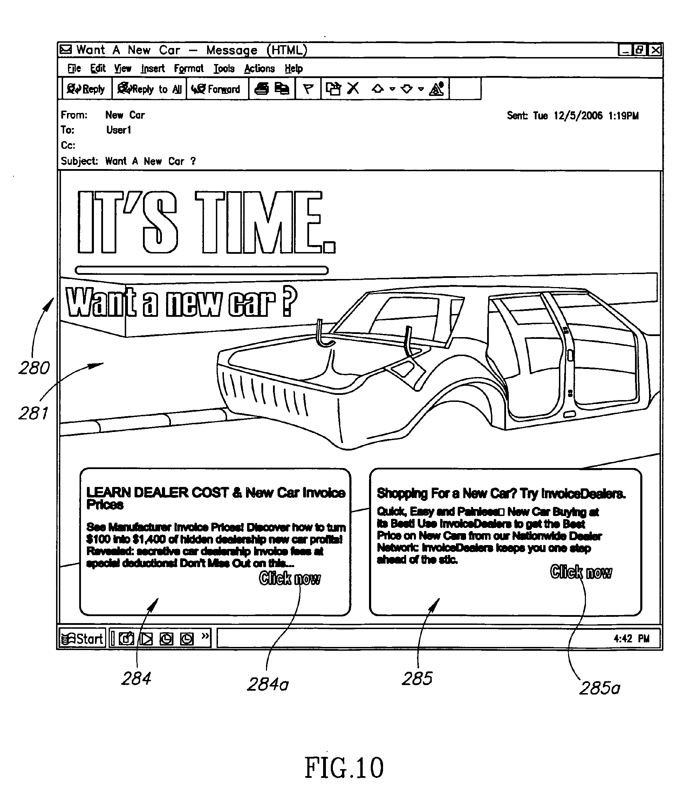

The creative is rendered to the template 150 as an image (represented by the box 151a), at the single position (I1) 151, and is now an opened e-mail (as detailed above). This opened e-mail 280, with the rendered image for the creative 281 (main image or body including locations for the hot spots, with images or sub images 284, 285 filling the hot spots) appears on the monitor of the user, as a viewable image, for example, as the screen shot of Fig. 10.

In Fig. 10, the exemplary e-mail 280 is based on a sent e-mail with two requests (N=2), and therefore, the listing text returned from the requisite content server (CS) 34a-34n and stored in the listing and click caches, typically includes only two listings, as shown and described above. In the e-mail 280, the image 281 placed into the section I1 151 of the template 150, for example, forms the body of the e-mail (corresponding to the main image or body of the creative 270), and includes an image (main image) 281 of an advertisement, with sub images 284, 285 in the hot spots (corresponding to the sub images 274, 275 of the creative), covering the links. The image 281 and sub images 284, 285 may be a single static image covering, or separate static images, the static images of a fixed content formed prior to the e-mail being sent.

The images (sub images) 284, 285 (in e-mail 280), are typically selected and placed into the hot spots when the e-mail is opened and in accordance with the listings selected to be the links (in accordance with the processes detailed herein). These images 284, 285, include portions 284a, 285a, that cover links for the user to click on, and are indicated as such, for example, "Click now". (The portions 284a and 285a are hereafter referred to as links). These underlying links, when activated, typically by a mouse click, ultimately provide the browser of the user 41a with a redirect URL, directing the browser to a target web site (or web page). This web site (or web page) is from the listing that resulted in the image that supported the clicked or activated link.

The links 284a, 285a include underlying strings. As detailed above, each string typically includes a URL for the proxy server 52 that will map to the home server (HS) 30, as indicated by "ac" detailed above. The data, for example, includes a unique identifier (UID), a mailing identifier (MID), a campaign identifier (CID), a creative identifier (CCID), and position data (POS=1 to n, where n=N, the total number of positions or click links), embedded in code, data or the like therein, with the unique identifier (UID), campaign identifier (CID) and mailing identifier (MID) being used to define a key (as detailed above). Example strings, for the each of the two positions (POS=1 and POS=2) are from the click links, listed above.

Activating the link, for example, by a mouse click, directs the user's browser to the home server (HS) 30, through the proxy server 52 (as the proxy server 52 is mapped to the home server (HS) 30). From the data in the string, a click cache 43d may be accessed. By accessing the click cache 43d, the browser receives a redirect URL for a web site (or web page) (that is targeted) corresponding to the image from the cached listing, as detailed below. The user's browser is ultimately directed to a target web site (target web page) corresponding to the redirect URL. The process for redirection to the target URL, resulting from opening an e-mail and clicking (activating) the requisite link, is described with reference to Fig. 11. This redirection is a click through, as the once clicking on or activating the underlying link 284, 285, the user, for example, user 41a, will see the web page of the target web site on his monitor, screen, or the like.

Fig. 11 shows a flow diagram of a process or method for redirecting the browsing application of (associated with) a user (via his computer) to the URL of a target web site (or web page). This process may be a third phase of the larger process, where the user reaches the web site (or web page) (target web site or target web page) of the party associated with the listing that became the of the time-relevant content of the creative.

Initially, the user, now having received the rendered images (creative, main image or body and sub images for the hot spots of the creative main image) in the template for the now-opened e-mail, will "click" on an image (sub image) at the requisite location (covering the link) 284a, 285a in the requisite sub image 284, 285 of the e-mail image 281, of the e-mail 280, as shown in Fig. 10, to which reference is now also made. Each link, as discussed above, is associated with a string, that includes the URL of the proxy server 52, that is mapped to the home server (HS) 30, with the unique identifier (UID), mailing identifier (MID), campaign identifier (CID), creative identifier (CCID) and position data (POS=1 to n, where n=N, the total number of positions or click links), embedded therein.

At block 302, as a result of the user mouse clicking on the link, for example, the link 284a, the home server (HS) 30 receives a unique identifier, campaign identifier, mailing identifier and position data (for the image location), typically in the above-described string. This receipt is through the proxy server 52, that initially receives the aforementioned data, and passes it through to the home server (HS) 30, as it is mapped to the home server (HS) 30 (by "ac" in the string, as detailed above. Accordingly, upon the activation or click of the requisite link, for example, the link 284a being clicked or activated, the proxy server 52 opens a connection or "pipe" to the home server (HS) 30, through which the sent unique identifier, campaign identifier, mailing identifier and position data (for the image location), is passed through.

The home server (HS) 30 then creates a key from the unique identifier (UID), the mailing identifier (MID), and the campaign identifier (CID), and locates the matching key in the key cache 43a. With the matching key located, the corresponding key in the click cache 43d is located. The click cache 43d is queried for position data matching the position data of the string (of the link), in order to obtain a redirect URL for the particular position data, at block 304. It is then determined if the redirect URL is in the click cache 43d, at block 306.

The redirect URL is a URL for the web site corresponding to the clicked text portion on the rendered e-mail, as programmed into the listed text in the click cache 43d. This URL is typically for a target web site or web page (content) on (or hosted by), for example, a third party server (TPS) 42a-42n.

If the redirect URL is not in the click cache 43d, the process moves to block 210, as shown by the broken line arrow of Fig. 5. The process continues through block 217 of Fig. 5, as shown by the broken line arrow, collectively, block 308, and returns to block 302.

However, if the redirect URL is in the click cache 43d (with the matching position data), the home server (HS) 30 sends the web browser of the user 40 the redirect URL at block 310. The user's web browser receives this redirect URL, and automatically accesses the web page (typically, a target web page) corresponding to the redirect URL.

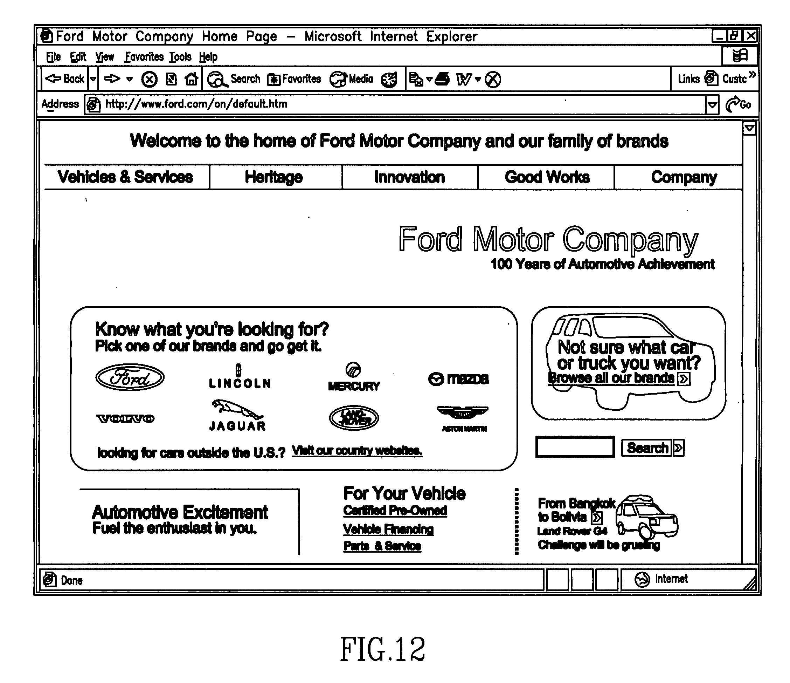

For example, the redirect URL (from KEY 1, position data POS=1 in the example click cache 43d of FIG. 8) may be "www.ford.com." In this case, the user's web browser would be directed to www.ford.com, whereby the web page, obtained at the address www.ford.com, shown in FIG. 12, would appear on the monitor of the computer 41b of the user 41a. The server that hosts the web site associated with www.ford.com may be any one or more of the third party servers (TPS) 42a-42n.

The click cache 43d is may be programmed to expire in a predetermined time period. This time may be, for example, approximately two hours, whereby it will need to be refreshed, restarting the above described processes.

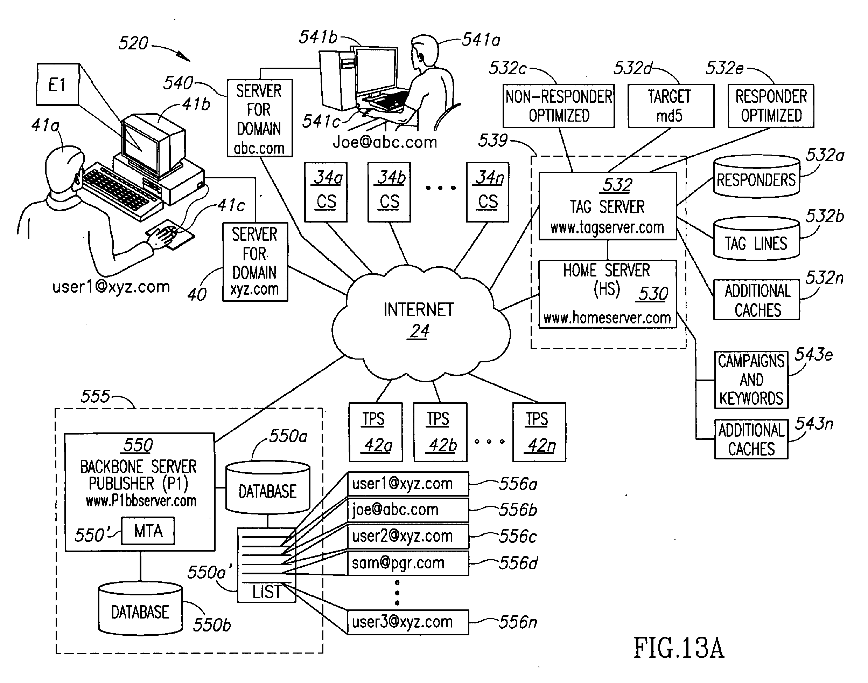

Figs. 13A-16 show another embodiment of the disclosed subject matter for providing content to third parties, for example, publishers, for placement into electronic communications by the third party or publisher, for example, e-mail, banners, and the like, as tag lines or footers (collectively "tag lines"), that are text-based, for intended recipients (users) of the electronic communication, of which the publisher may function as an intermediary or backbone server (between the sensing party and the intended recipient). The publisher may be unrelated to the content provider and the publisher is the sender of the electronic communication with the provided content. The electronic communications that include the provided content are such that portions of the content are static with portions therein for receiving additional time relevant content.

Fig. 13A shows a system 520 on which the disclosed subject matter is shown in an exemplary operation. In this system 520 components with numbers the same as those in Fig. 1 and described above are the same. Components whose numbers have been increased by "500" are the same or similar components to those shown in Fig. 1 and described above, with differences described below.

The servers that form the system 520, for example, include a home server (HS) 530, a tag server 532, and one or more content servers (CS) 34a-34n. The home server (HS) 530 and tag server 532 are typically controlled by the same entity, who is a content provider, the entity indicated in by the broken line block 539. These servers 530, 532 and 34a-34n are linked to the Internet 24, so as to be in communication with each other, similar to that detailed above. The servers 530, 532, include single or multiple components, modules or the like for performing the requisite functions as detailed below, and the components may be based in hardware, software, or combinations thereof. The servers 530, 532 may also have internal storage media and/or be associated with external storage media.

Servers 530 and 532 may be coupled and may be electronically linked internally (within the entity 539), and operate to provide content, for example, tag lines or footers, for example, that are text based, to electronic communications, for example, electronic mail messages (e-mails). The tag lines or footers are inserted by a publisher 555, or the like, who controls a backbone server 550 through which the sender of the electronic communication, sends his electronic communication, for example, e-mail. The publisher 555 may be an entity that is separate from and unrelated to the entity 539 that controls the servers 530, 532. The entity 539 may be one or more entities. The publisher (P1) 555 is representative of the multiple publishers or other backbone server providing entities that may be part of the system 520.

The servers 530, 532, 34a-34n of the system 520 are linked (either directly or indirectly) to an endless number of other servers and the like, via the Internet 24. Other servers, exemplary for describing the operation of the system 520, include domain servers 40, 540 for the domains (for example, the domains "xyz.com" and "abc.com", respectively) of the respective users 41a, 541a (for example, whose e-mail addresses are user1@xyz.com and joe@abc.com), linked to the computers 41b, 541b of the respective users 41a, 541a. Still other servers may include third party servers (TPS) 42a-42n, controlled by publishers, content providers, web site promoters and other entitles, that may or may not be related to any of the entities detailed above.

The home server (HS) 530 is of an architecture that includes components for providing numerous additional server functions and operations, for example, comparison and matching functions, policy and/or rules processing, various search and other operational engines, browser directing and redirecting functions, and the like, as detailed above. The home server (HS) 530 includes various processors, including microprocessors, for performing the server functions and operations detailed herein, and storage media, either internal or associated therewith, such as caches 543e-543n. While these caches 543e-543n are shown, this is for explanation purposes, as the home server (HS) 530 may be associated with additional caches, databases, as well as numerous other additional storage media, both internal and external thereto. For explanation purposes, the home server (HS) 530 may have a uniform resource locator (URL) of, for example, www.homeserver.com.

This home server (HS) 530, for example, employs a search engine, or links to one (in another server or the like via the Internet 24), in order to direct the received request or received data to the most suitable content server (CS) 34a-34n. While a single home server (HS) 530 is shown, the home server (HS) 530 may be formed of multiple servers and/or components.

The tag server 532 may also be one or more servers, components or the like, but is shown for description purposes as a single server. The tag server 532 is of an architecture for receiving md5s (e-mail addresses as hashed by the md5 algorithm, referred to hereinafter as an "md5"), and includes programs for assigning a tag line or footer (as data) to the md5, by any one of numerous methods (detailed below), and returns, data for the tag line or footer, to the backbone server 550. The tag server 532 architecture also supports programs for data generation that is sent to the publisher server (P1) 550, as well as for electronic communication with the home server (HS) 530.

The tag server 532 includes various processors, including microprocessors, for performing the aforementioned server functions and operations detailed herein, and storage media, either internal or associated therewith, and caches. A first cache 532a for md5s associated with the cryptographically hashed e-mail addresses received of md5s for recipients (users) who are to receive e-mails through the backbone server 550. There is a second cache 532b with data (for example, text) for the various tag lines or footers. A third cache 532c is for target campaigns for non-responder md5s. A fourth cache 532d is for target campaigns for responder md5s, and a fifth cache 532e is for optimized responder campaigns, for the target campaigns for the md5 responders. Other caches, databases, as well as numerous other additional storage media, both internal and external thereto, for numerous functions may also be part of the tag server 532 server, and are designated 532n. For explanation purposes, the tag server 532 may have a uniform resource locator (URL) of, for example, www.tagserver.com.

The backbone server 550 may be one or more servers, components or the like, but is shown for description purposes as a single server. The backbone server 550 is of an architecture that includes databases 550a, 550b. For example, one database 550a stores one or more lists 550a' of e-mail addresses of users or recipients 556a-556n. Another database 550b stores and maps e-mail addresses from the aforementioned lists 550a' to their corresponding cryptographically hashed e-mail addresses by the md5 algorithm (md5s).

The backbone server 550 includes software and hardware allowing it to function as a mail (e-mail) transfer agent (MTA), and perform all other functions for supporting, receiving, sending and other transfers of electronic data and communications, such as e-mail. The mail transfer agent (MTA) is shown, for example, as a module 550' within the backbone server 550, but may be on a separate server or a separate component. The backbone server 550 and the mail transfer agent module 550' are configurable to work with numerous types of e-mail clients, associated with various intended recipients (users), such as America Online® (AOL®), Eudora®, Outlook®, and other web-based clients.

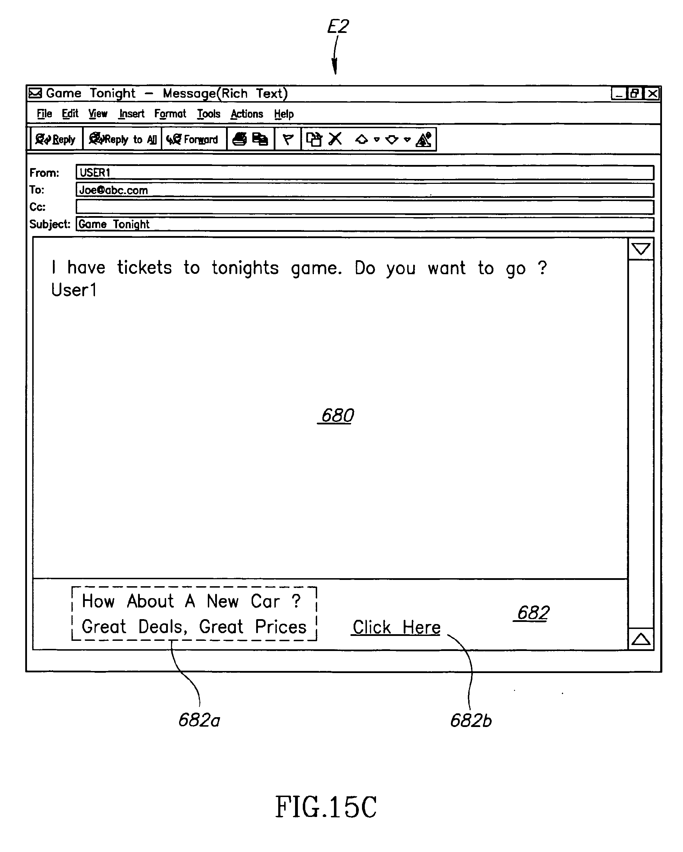

The backbone server 550 includes programs for cryptographically hashing the aforementioned e-mail addresses of users, for example, 556a-556n (from the list 550a') through the md5 algorithm, and sending the md5 corresponding to the e-mail address, to the tag server 532. There is also software, hardware and combinations thereof for receiving the code of a tag line or footer (hereinafter tag line and footer referred to collectively and interchangeably as a "tag line") from the tag server 532, along with additional data, coordinating it with an e-mail address from the list 550a', and adding data to this acquired data, to create an electronic communication, that may be in the form of an e-mail, that includes a tag line, for example, a text tag line, on the e-mail as received by the intended recipient (for example, the e-mail E2, received by joe@abc.com, in Fig. 15C, detailed below). The e-mail (once received, for example, from userl@xyz.com) is sent from the mail transfer agent (MTA) module 550' to the intended recipient, for example, user 541a at the e-mail address joe@abc.com.

The backbone server 550 includes various processors, including microprocessors, for performing the server functions and operations detailed herein, and storage media, either internal or associated therewith, as well as other server operations. Also, for explanation purposes, the backbone server 550 may have a uniform resource locator (URL) of, for example, www.P1bbserver.com.

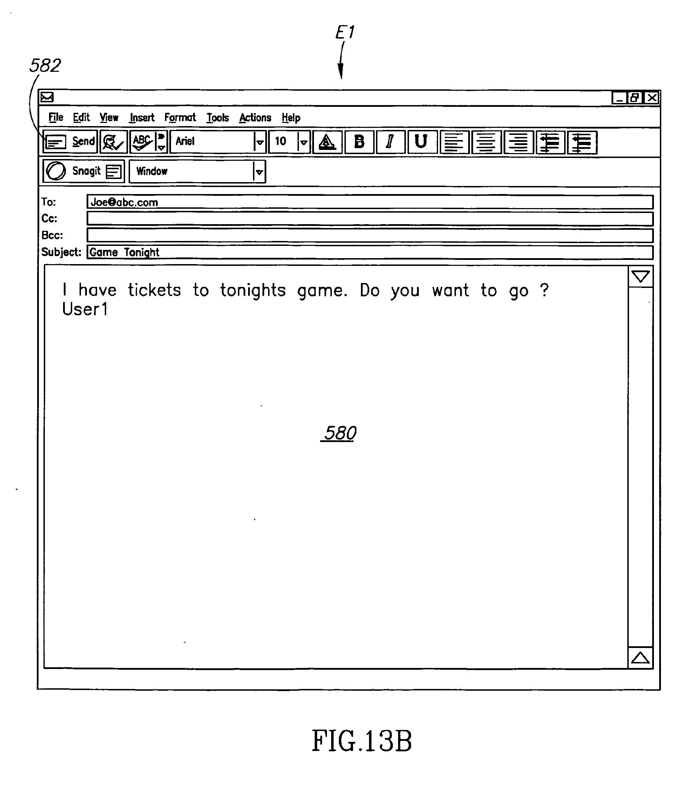

Turning now to Fig. 13B, the user 41a has composed the e-mail E1 to be sent to an intended recipient, for example, joe@abc.com (user 541a). The text of the e-mail is located within the space 580. Once the user 41a clicks on the "SEND" button 582 of the e-mail E1, this e-mail travels to the backbone server 550. The backbone server 550 adds this e-mail to the list 550a', stores in the database 550a, and creates an md5 hash of this e-mail address, joe@abc.com, the md5 hash stored in the database 550b.

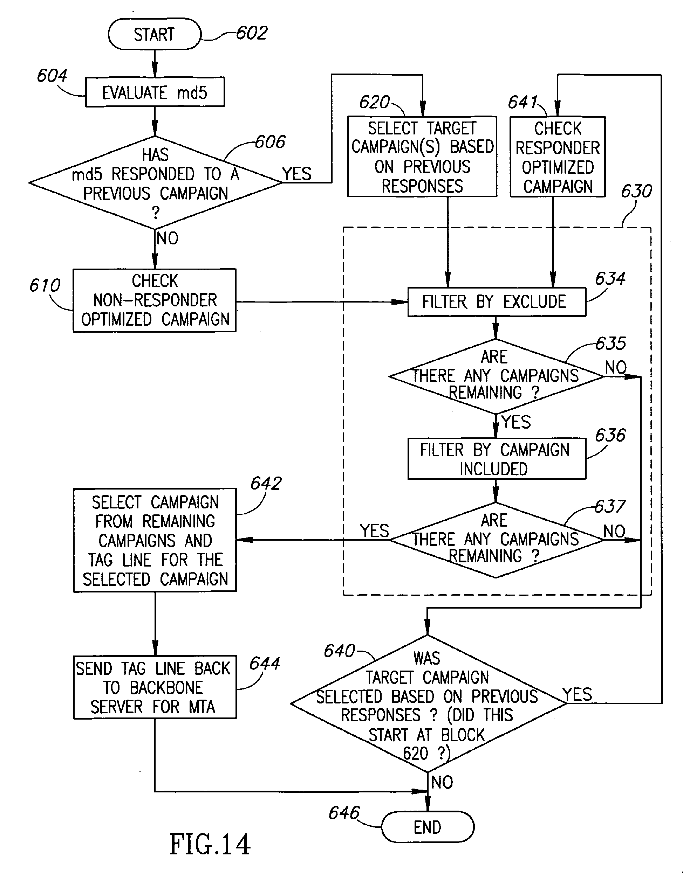

The process of the flow diagram of Fig. 14 now begins. The process of Fig. 14 is similar to that of Fig. 2, except that instead of a creative being selected for the intended recipient, a tag line for the e-mail to be received by the intended recipient (user), for example, joe@abc.com, is selected. Additionally, filtration by thresholds, as detailed above, is typically not part of the filtration process (of block 630).

The backbone server 550 sends the md5 along with, data including, for example, the domain of the e-mail address of the intended recipient (user), for example, "abc.com", to the tag server 532. This data may be submitted as a string, for example, the string as follows:

```
http://tagserver.com/fx?affid=1&sender=57e8c0b0ef702ab4eee9
1a644cdc51f5,xyz.com&rcpts=226e68870102dd9dd404a40bb24e3164
,abc.com&pixel=1
```

The string includes the URL for the tag server 532, to where the communication is sent. It also includes an affiliate identifier. For example, the affiliate identifier, "affid" is "1", with "1" being, for example, the identifier for the backbone server 550 of entity P1. This affiliate identifier is an identifier for the entity server, for example, the publisher P1 via their backbone server 550, who is requesting the click link from the tag server 532. There is the md5 for the sender of the e-mail and his domain, after "sender=", for example, the md5 ("57e...51F5") and the domain (xyz.com) for e-mail sender, userl@xyz.com, and there is the md5 for the recipient of the e-mail and his domain, after "rcpts=", for example, the md5 ("226e ... e3164") and the domain (abc.com) for e-mail recipient joe@abc.com. There is also a tracking pixel, expressed as "pixel=1". This tracking pixel allows the home server (HS) 530 to track clicks on tag lines, for example, for statistics gathering, such as for revenue analysis, and the like.

This data from the backbone server 550 is now received in the tag server 550, and the process of selecting and returning a tag line or footer for the e-mail for the particular recipient (user) (for example, joe@abc.com), whose e-mail address corresponds to the md5, begins, at block 604.

The received md5 is compared against md5's of previous responders, stored in the cache 532a, in an evaluation process of block 604. It is then determined if this md5 was a previous responder, at block 606. This determination is made, for example, by checking the md5 against a cache, for example responders cache 532a, of previously received and stored md5s.

If this md5 is not matched with the md5 of a previous responder, the md5 is treated as a non-responder, and the process moves to block 610. In the process at block 610, the non-responder database 532b is checked for campaigns suitable for this non-responder md5. A campaign is selected for the non-responder md5, for example, by selecting the "active" campaign among rotating campaigns (with each campaign of the rotating campaigns being "active" at predetermined intervals). The selected campaign is then subjected to filtration, at block 630, shown in broken lines.

Returning to block 606, if the md5 matches a previous responder md5, the process moves to block 620, where one or more target campaigns are selected based on the previous campaigns sent to the md5 responder. This target campaign(s) may be determined by numerous methods, for example, a rotating method of preprogrammed campaigns based on the previously responded to campaign(s), by the user, whose e-mail address corresponds to the md5. Alternately, a campaign for the user, whose e-mail corresponds to the md5 may be selected in accordance with one or more of the processes detailed in U.S. Patent Application Serial No. 11/774,066, entitled: System And Method For Behaviorally Targeting Electronic Communications, Attorney Docket No. 458280, the disclosure of which is incorporated by reference herein.

With the campaigns now selected, non-responder optimized campaigns from block 610 or target campaigns form block 620 they are subjected to filtration, at block 630. The filtration process is shown in broken lines.

The filtration process of block 630 is now described. The filtration process of block 130 includes three sub-processes 634, 636, 638. The filtration process of block 630 is, for example, controlled by the system administrator and may employ one or more of the sub processes 634, 636, 638 in any combination and/or order.

Block 634 involves filtration by exclusion. Excluded campaigns are campaigns specifically preprogrammed not to be sent to the particular md5 being evaluated. It is then determined, at block 635 if there are any campaigns left as a result of the filtration by exclusion. It there are not any campaigns left after filtration by exclusion, the process moves to block 640, as detailed below. If there is at least one campaign remaining, the process moves to block 636.

Block 636 involves filtration by inclusion. Included campaigns are campaigns specifically preprogrammed that the md5 being evaluated may receive. It is then determined, at block 637 if there are any campaigns left as a result of the filtration by inclusion. It there are not any campaigns left after filtration by inclusion, the process moves to block 640, as detailed below. If there is at least one campaign remaining, the process moves to block 638.

Block 638 involves filtration by the last campaign sent to the md5 being evaluated. This filtration step avoids the same campaign being sent twice to the particular md5, and in particular, the user associated with the e-mail address associated with the md5. If the campaign to be sent is the same as the previous campaign designated to be sent to that particular md5, the campaign will not be sent. The process moves to block 639, where it is then determined, if there are any campaigns left as a result of the filtration by last sent campaign.

If there are not any remaining campaigns, from blocks 635, 637 or 639, the process moves to block 640. At block 640, it is determined whether this responder entered the filtration process of block 630 with targeted campaigns selected based on previous responses (did the process start at block 620). If yes at block 640, the process moves to block 641, where the responder optimized database 532c is checked to determine the responder campaigns. These responder campaigns are typically one or more campaigns predetermined for predetermined random responders according to programs or simply random. Once such campaigns are obtained, the process returns to block 630, and continues as detailed above. If no at block 640, the process moves to block 646, where it ends.

If there is at least one campaign remaining, the process moves to block 642. At block 642, a campaign is selected from the remaining campaigns. For example, this could be the campaign with the highest rank as per the process disclosed in U.S. Patent Application Serial No. 11/774,066, or a random selection method. Also within block 642 a tag line for the campaign is selected. This tag line is for example, the active tag line, typically selected on a rotating basis, for example, each tag line of the series of tag lines active at predetermined intervals. Alternately, any other selection method for the tag line is also suitable.

At block 644 data for the tag line, along with other data is sent back to the backbone server 550. The process ends at block 646 until the next md5 is received in the tag server 532.

Turning back to block 644 in detail, data may be in the form of a data string, that, for example, includes data for the selected tag line, as well as additional data, is sent back to the backbone server 550.

The data for the tag line includes a click link. The click link, for example, includes the addresses of the home server (HS) 630, along with embedded data or code for the unique identifier (UID), for example, the md5 of the e-mail recipient (user) (as discussed above), the campaign, for example, as a campaign identifier (CID) (as discussed above), an affiliate identifier (AID) and a request identifier (RID). The affiliate identifier (AID) is for the backbone server 550 or publisher (P1) who is delivering the e-mail with the tag line to the intended recipient (user), for example, the user 541a (joe@abc.com). The request identifier (RID) is used to correlate the tag line, that is the same on sent from the tag server 532 to the backbone server 550, that is the same as that clicked on when the click link is activated, and correlated as such in the home server (HS) 530. These RID's are, for example, utilized by the home server (HS) 530 for statistical purposes, such as monitoring revenue, and the like. The click link also serves as the "request", discussed below.

The additional data includes the md5 for the recipient, the text of the tag line, and data for a tracking pixel. The tracking pixel is HTML code inserted into the e-mail at the backbone server 550 that is used by the home server (HS) 530, to monitor clicks of the tag line or footer.

This data is represented, for example, by a string, and, for example, should an automobile campaign be selected for the intended recipient (user), joe@abc.com, the data, including supporting data and a click link for the e-mail to be sent from the backbone server 550 is as follows:

```
recipient=226e68870102dd9dd404a40bb24e3164
text=How About A New Car? Great Deals, Great Prices
pixel=<img
src="http://www.tagserver.com/fi/LYNeWznBLtC0HpwWOk9YasV939
C93O2cEg9xYWsSxFwXk6DYw5iLczbdAnso/" alt="" width="1"
height="1"/>
clickurl=http://homeserver.com/fc/JE2cYoA9ZqUGP4g8pVrZAKUAE
vdLZ6XsdEr4D0jmhcmriWXViwW7wI/
```

In this string, going from top to bottom, the supporting data includes the following. The "recipient" is the unique identifier, and includes the md5 hash of the email address (md5) of the e-mail recipient (user), for example, "226e...e3164) for joe@abc.com. The text, indicated by "text=" is the text for the tag line, for example, "How About A New Car? Great Deals, Great Prices". The tracking pixel is indicated by "pixel=" and, for example, is "<img src="http//www.tagserver.com ... height="1"/>". The click link is indicated by "clickur1=", and, for example, is http://homeserver.com ... W7wl/".

The click link provides an internet protocol address for directing the HTTP request. While one click link is shown, there may be multiple click links in a tag line that would operate as detailed herein.

Once this data is received in the backbone server 550, the md5 is converted to an e-mail address by virtue of the md5 being mapped back to the e-mail address in the hash database 550b of the backbone server 550. The data for the tag line is placed onto this received data, i.e., the data string, by the backbone server 550. The e-mail address of the intended recipient is obtained from the hash database 550b, as the md5 is mapped back to the e-mail address of the intended recipient (user). The packaged data, for example, as a data string, is now in an electronic communication, and is sent from the MTA module 550' as, for example, an e-mail to the intended recipient, for example, the intended recipient, for example, the user 541a, at the e-mail address joe@abc.com. The data is such that it will appear as a tag line, but also appear as a text box in another part of the body of the opened e-mail, banner, or other electronic communication, if programmed accordingly.

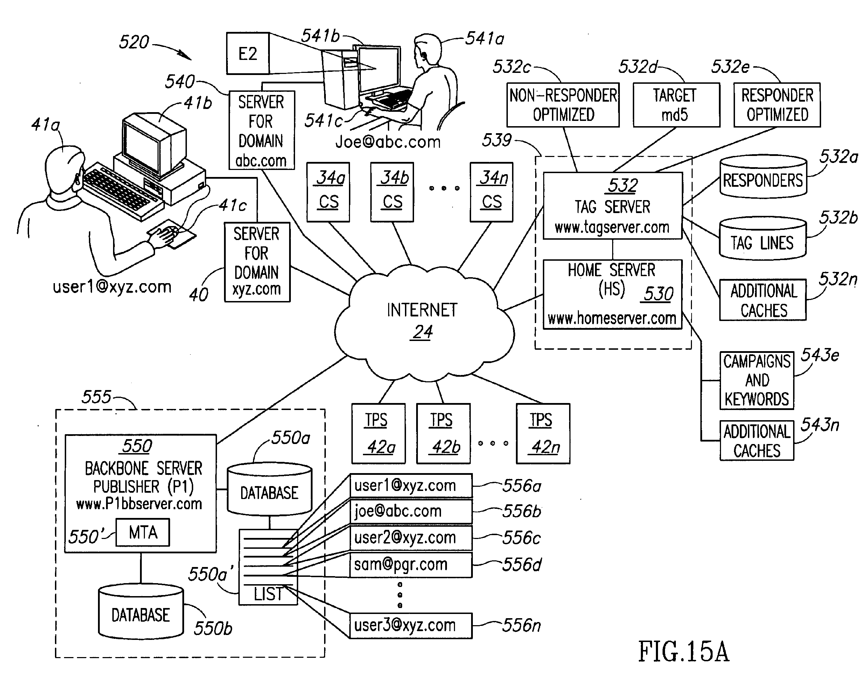

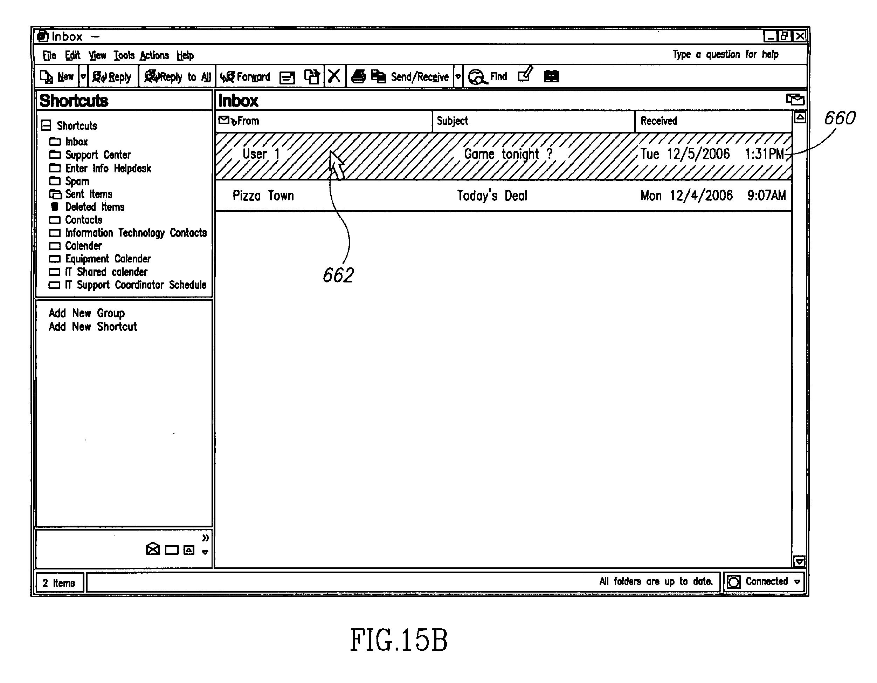

Turning now to Fig. 15A, the backbone server 550 sends the e-mail with the aforementioned data to the intended recipient (user) 541a, for example, joe@abc.com, where the e-mail client retrieves the e-mail from the server 540 for the recipient's domain (abc.com). The e-mail (from User1@xyz.com, indicated in the column "From" as User1) appears in the "In Box" of the user's computer 541b, for example, in accordance with the screen diagram of Fig. 15B.

In Fig. 15B, the intended recipient (user) 541a, for example, having the e-mail address joe@abc.com, has decided to open this e-mail from User1 41a, as indicated by the shaded box 660. Accordingly, the user 541a moves his mouse 541c into the box 660 and clicks in the box 660, as indicated by the arrow 662, and the e-mail E2 is opened. The opened e-mail E2 is shown by the screen shot of Fig. 15C.

Turning to Fig. 15C, the opened e-mail E2 includes a body 680 with the content of the message, as entered by user1, and a tag line 682, within the body 680. For example, this tag line 682 is shown as a text box, and for example, a footer, as it is at the bottom of the e-mail body 680. Alternately, the text box with the tag line 682 may be placed anywhere in the e-mail body 680 (as programmed or coded by the publisher (P1) or other backbone server 550).

The tag line 682 includes text lines, shown by the broken line box 682a, for example, "How About A New Car? Great Deals, Great Prices" (the broken line box for emphasis only), obtained from the "text" of the supporting data. The tag line 682 also includes an activatable portion 682b, indicated by the words "Click Here", that covers an underlying activatable link, corresponding to the click link. The placement of the tag line 682 in the e-mail is configured (programmed) in the e-mail data, for example, as provided by entity, for example, the publisher (P1), who controls the backbone server 550.

When the activatable portion 682b is activated, by a mouse click or the like, a connection or pipe to the home server (HS) 530 (from the user's computer 641a) is opened and a URL of a target web site, corresponding to the tag line, is obtained from a listing obtained from a content server 34a-34n, and the user's browsing application is redirected to the URL of the target web site. The target web site is associated, for example, with one or more of the third party servers 42a-42n. The connection or pipe remains open at least through the browsing application redirect to the target web site, as detailed below.

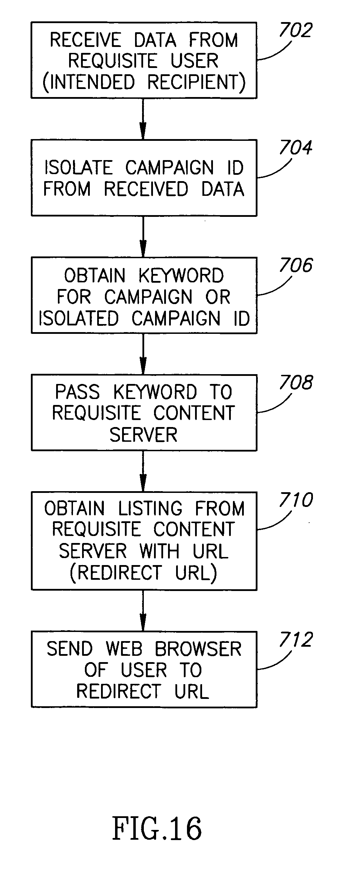

Attention is now directed to the flow diagram of Fig. 16, to illustrate an exemplary process of redirecting the browsing application of the user who has clicked on the activatable portion 682b of the opened e-mail E2, to the target web site corresponding to the tag line or footer 682 of the received e-mail E2. This redirection is a click through, as the once clicking on or activating the underlying link 682b, the user, for example, user 541a will see the web page of the target web site on his monitor, screen, or the like.

Initially, a connection or pipe has been opened from the user's computer 541b to the home server (HS) 530 (by the click link below being mapped to the home server (HS) 530). At block 702, the home server (HS) 530 receives data from the requisite user (for example user 541a), for example, as a request. The data is in a string, for example, as follows:

```
clickurl=http://homeserver.com/fc/JE2cYoA9ZqUGP4g8pVrZAKUAE
vdLZ6XsdEr4D0jmhcmriWXViwW7wI/
```

This is the click link as it was sent from the tag server 532 above. From this now-returned click link, the campaign identifier (CID), for the selected automobile campaign, is isolated from the received data string (where this campaign identifier is embedded), at block 704. The home server (HS) 530 then searches the cache 543e for the campaign identifier, and the corresponding keyword for the campaign identifier, at block 706. The keyword for the requisite campaign identifier may be selected by any of the methods detailed above.

The home server (HS) 530 passes the keyword to the requisite content server 34a-34n, at block 708. The requisite content server 34a-34n, returns a listing to the home server (HS) 530, at block 710. This listing includes a URL for the target web site corresponding to the tag line 682. For example, the selected key word for the automobile campaign at the time the user 641a clicked on the activatable portion 682b of the tag line 682 of the opened e-mail E2, was NEW CARS. The requisite content server 34a-34n returned a listing with a URL for the Ford Motor Company, having a URL of www.ford.com. This listing may be in accordance with principles of pay-per click, or any other known listing generation (and prioritizing mechanism). The process moves to block 712.

Alternately, block 706, 708 and 710 may be in accordance with the methods detailed above for selecting a keyword, based on a keyword/keyword provider (KPV) combination. Based on these methods, content, for example, listings, will be obtained from the requisite content server or servers (CS) 34a-34n. At block 706, the keyword, based on the keyword/keyword provider, may be selected in accordance with the methods detailed above and shown in Figs. 6B and 6C above.

The home server (HS) 530 passes the keyword to the requisite content server 34a-34n, of the keyword provider (KPV) that was selected, that has inventory for the listings for the selected keyword, at block 708. The requisite content server 34a-34n, returns a listing to the home server (HS) 530, at block 710. This listing includes a URL for the target web site corresponding to the tag line 682. The process moves to block 712.

The browsing application of the user is now connected with the URL for the target web site, at block 712. For example, the browsing application associated with the user 541a is now redirected to the URL, www.ford.com, whereby the web page, obtained at the address, www.ford.com, shown in FIG. 12, would appear on the monitor of the computer 541b of the user 541a. The server that hosts the site associated with www.ford.com may be any one or more of the third party servers (TPS) 42a-42n.

The above-described processes including portions thereof can be performed by software, hardware and combinations thereof. These processes and portions thereof can be performed by computers, computer-type devices, workstations, processors, micro-processors, other electronic searching tools and memory and other storage-type devices associated therewith. The processes and portions thereof can also be embodied in programmable storage devices, for example, compact discs (CDs) or other discs including magnetic, optical, etc., readable by a machine or the like, or other computer usable storage media, including magnetic, optical, or semiconductor storage, or other source of electronic signals.

The processes (methods) and systems, including components thereof, herein have been described with exemplary reference to specific hardware and software. The processes (methods) have been described as exemplary, whereby specific steps and their order can be omitted and/or changed by persons of ordinary skill in the art to reduce these embodiments to practice without undue experimentation. The processes (methods) and systems have been described in a manner sufficient to enable persons of ordinary skill in the art to readily adapt other hardware and software as may be needed to reduce any of the embodiments to practice without undue experimentation and using conventional techniques.

While preferred embodiments of the disclosed subject matter disclosed subject matter have been described, so as to enable one of skill in the art to practice the present disclosed subject matter, the preceding description is intended to be exemplary only. It should not be used to limit the scope of the disclosed subject matter, which should be determined by reference to the following claims.

## Claims

1. A system (39) for automatically providing content to an electronic communication (280) comprising:

a first component (30) configured for receiving first data from the intended recipient (41a) of an electronic communication (280) at a time corresponding to the electronic communication (280) is opened; and,
a second component (30) configured for providing first content (284a, 285a) and second content (281, 284, 285) to an application associated with the opened electronic communication (280) corresponding to the time the electronic communication (280) is opened, the second component (30) additionally configured for:
determining a keyword provider (KPV1-KPVn) for the first content (284a, 285a) for the opened electronic communication (280) based on the received first data, the received first data causing the selection of an identifier (NEW CARS, USED CARS, AMERICAN CARS, CAR REPAIR) for the first content (284a, 285a) and a keyword provider (KPV1-KPVn), said identifier and said keyword provider being selected from a selected random sample (43ex) of identifiers and keyword providers, each keyword provider (KPV1-KPVn) being associated with its own content provider (34a-34n) for the first content (284a, 285a), the content provider (34a-34n) having access to the first content (284a, 285a) corresponding to the identifier (NEW CARS, USED CARS, AMERICAN CARS, CAR REPAIR);
reading the selected identifier and, in accordance with the reading, passing the selected identifier (NEW CARS, USED CARS, AMERICAN CARS, CAR REPAIR) to the designated content provider (34a-34n) associated with the determined keyword provider (KPV1-KPVn) over the network (24) ;
obtaining the data for the first content (284a, 285a) for the electronic communication (280) from the designated content provider (34a-34n) over the network (24); and,

delivering the data for the first content (284a, 285a) of the electronic communication (280) to the application associated with the opened electronic communication (280).

**2.** The system of claim 1, additionally comprising:

a third component (38) for determining data for the second content (281, 284, 285) for the electronic communication (280) for supporting the data for the first content (284a, 285a) in the form of at least one image (281, 284, 285) that supports at least one activatable link (284a, 285a) based on the received identifier (NEW CARS, USED CARS, AMERICAN CARS, CAR REPAIR); and

a fourth component (30) for delivering the data for the second content (281, 284, 285) to the application associated with the opened electronic communication (280).

**3.** The system of claim 2, wherein the data for the second content (281, 284, 285) of the electronic communication (280) includes data for at least one primary image (281) including at least one secondary image (284, 285) for a text box that supports at least one activatable link (284a, 285a).

**4.** The system of claim 3, wherein the at least one activatable link (284a, 285a) is associated with a target web site (42a-42n).

**5.** The system of claim 4, wherein the at least one activatable link (284a, 285a) when activated directs the browsing application of a computer (41b) associated with the intended recipient (41a) to the target web site (42a-42n).

**6.** The system of anyone of claims 1 to 5, wherein the determined identifier includes at least one key word (NEW CARS, USED CARS, AMERICAN CARS, CAR REPAIR).

**7.** The system of anyone of claims 1 to 6, wherein the first data includes at least one identifier for at least one of a category, advertising campaign or informational campaign.

**8.** The system of claim 7, wherein the first data includes at least one identifier for the e-mail address of the computer (41b) associated with the intended recipient (41a).

**9.** The system of claim 2, wherein the first component (30), the second component (30), the third component (38) and the fourth component (30) are on at least one server.

**10.** A method for automatically providing content to an electronic communication (280) comprising:

receiving first data from the intended recipient (41a) of an electronic communication (280) at a time corresponding to the electronic communication (280) is opened; and,

providing first content (284a, 285a) and second content (281, 284, 285) to an application associated with the opened electronic communication (280) corresponding to the time the electronic communication (280) is opened, including:

determining a keyword provider (KPV1-KPVn) for the first content (284a, 285a) for the opened electronic communication (280) based on the received first data, the received first data causing the selection of an identifier (NEW CARS, USED CARS, AMERICAN CARS, CAR REPAIR) for the first content (284a, 285a) and a keyword provider (KPV1-KPVn), said identifier and said keyword provider being selected from a selected random sample (43ex) of identifiers and keyword providers, each keyword provider (KPV1-KPVn) being associated with its own content provider (34a-34n) for the first content (284a, 285a), the content provider (34a-34n) having access to the first content (284a, 285a) corresponding to the identifier (NEW CARS, USED CARS, AMERICAN CARS, CAR REPAIR);

reading the selected identifier and, in accordance with the reading, passing the selected identifier (NEW CARS, USED CARS, AMERICAN CARS, CAR REPAIR) to the designated content provider (34a-34n) associated with the determined keyword provider (KPV1-KPVn) over the network (24) ;

obtaining the data for the first content (284a, 285a) for the electronic communication (280) from the designated content provider (34a-34n) over the network (24); and,

delivering the data for the first content (284a, 285a) of the electronic communication (280) to the application associated with the opened electronic communication (280).

**11.** The method of claim 10, additionally comprising:

determining data for the second content (281, 284, 285) for the electronic communication (280) for supporting the data for the first content (284a, 285a) in the form of at least one image (281, 284, 285) that supports at least one activatable link (284a, 285a) based on the received identifier (NEW CARS, USED CARS, AMERICAN CARS, CAR REPAIR); and

delivering the data for the second content (281, 284, 285) to the application associated with the opened electronic communication (280).

**12.** A computer program having programming means for automatically providing content to an electronic communication (280), by performing the following steps when such program is executed on a computer (30), especially on a suitable system (39), such as the system of claim 1:

receiving first data from the intended recipient (41a) of an electronic communication (280) at a time corresponding to the electronic communication (280) is opened; and,

providing first content (284a, 285a) and second content (281, 284, 285) to an application associated with the opened electronic communication (280) corresponding to the time the electronic communication (280) is opened, including:

determining a keyword provider (KPV1-KPVn) for the first content (284a, 285a) for the opened electronic communication (280) based on the received first data, the received first data causing the selection of an identifier (NEW CARS, USED CARS, AMERICAN CARS, CAR REPAIR) for the first content (284a, 285a) and a keyword provider (KPV1-KPVn), said identifier and said keyword provider being selected from a selected random sample (43ex) of identifiers and keyword providers, each keyword provider (KPV1-KPVn) being associated with its own content provider (34a-34n) for the first content (284a, 285a), the content provider (34a-34n) having access to the first content (284a, 285a) corresponding to the identifier (NEW CARS, USED CARS, AMERICAN CARS, CAR REPAIR);

reading the selected identifier and, in accordance with the reading, passing the selected identifier (NEW CARS, USED CARS, AMERICAN CARS, CAR REPAIR) to the designated content provider (34a-34n) associated with the determined keyword provider (KPV1-KPVn) over the network (24);

causing the data for the first content (284a, 285a) for the electronic communication (280) from the designated content provider (34a-34n) to be obtained over the network (24); and,

causing the data for the first content (284a, 285a) of the electronic communication (280) to the application associated with the opened electronic communication (280) to be delivered.

**13.** The computer program of claim 12, wherein the program performs the following additional steps when the program is executed on the system:

determining data for the second content (281, 284, 285) for the electronic communication (280) for supporting the data for the first content (284a, 285a) in the form of at least one image (281, 284, 285) that supports at least one activatable link (284a, 285a) based on the received identifier (NEW CARS, USED CARS, AMERICAN CARS, CAR REPAIR); and

causing the data for the second content (281, 284, 285) to the application associated with the opened electronic communication (280) to be delivered.

**14.** The computer program of claim 13, wherein the data for the second content (281, 284, 285) of the electronic communication (280) includes data for at least one primary image (270) including at least one secondary image (274, 275) for a text box that supports at least one activatable link.

**15.** The computer program of claim 14, wherein the at least one activatable link is associated with a target web site.

**16.** The computer program of claim 15, wherein the at least one activatable link when activated directs the browsing application of a computer (41b) associated with the intended recipient (41a) to the target web site.

**17.** The computer program of anyone of claims 12 to 16, wherein the determined identifier includes at least one key word (NEW CARS, USED CARS, AMERICAN CARS, CAR REPAIR).

**18.** The computer program of anyone of claims 12 to 17, wherein the application associated with the opened electronic communication (280) includes an electronic mail application.

**Patentansprüche**

1. System (39) zur automatischen Bereitstellung von Inhalten für eine elektronische Kommunikation (280), aufweisend:

   eine erste Komponente (30), die dazu eingerichtet ist, erste Daten von dem beabsichtigten Empfänger (41a) einer elektronischen Kommunikation (280) zu einem Zeitpunkt, zu welchem die elektronische Kommunikation (280) geöffnet wird, zu empfangen; und
   eine zweite Komponente (30), die dazu eingerichtet ist, einen ersten Inhalt (284a, 285a) und einen zweiten Inhalt (281, 284, 285) für eine Anwendung bereitzustellen, die der geöffneten elektronischen Kommunikation (280) entsprechend dem Zeitpunkt, zu welchem die elektronische Kommunikation (280) geöffnet ist, zugeordnet ist, wobei die zweite Komponente (30) zusätzlich dazu eingerichtet ist:
   einen Passwort-Provider (KPV1-KPVn) für den ersten Inhalt (284a, 285a) für die geöffnete elektronische Kommunikation (280) basierend auf den empfangenen ersten Daten zu bestimmen, wobei die empfangenen ersten Daten die Auswahl eines Identifikators (NEW CARS, USED CARS, AMERICAN CARS, CAR REPAIR) für den ersten Inhalt (284a, 285a) und eines Passwort-Providers (KPV1-KPVn) veranlassen, wobei dieser Identifikator und dieser Passwort-Provider aus einer ausgewählten Zufallsauswahl (43ex) von Identifikatoren und Passwort-Providern ausgewählt werden, wobei jeder Passwort-Provider (KPV1-KPVn) mit einem eigenen Inhalt-Provider (34a-34n) für den ersten Inhalt (284a, 285a) verknüpft ist, wobei der Inhalt-Provider (34a-34n) Zugriff auf den zu dem Identifikator (NEW CARS, USED CARS, AMERICAN CARS, CAR REPAIR) zugehörigen ersten Inhalt (284a, 285a) hat;
   den ausgewählten Identifikator auszulesen und den ausgewählten Identifikator (NEW CARS, USED CARS, AMERICAN CARS, CAR REPAIR) in Übereinstimmung mit diesem Auslesen an den zugehörigen Inhalt-Provider (34a-34n), der mit dem bestimmten Passwort-Provider (KPV1-KPVn) verknüpft ist, über das Netzwerk (24) weiterzugeben;
   die Daten für den ersten Inhalt (284a, 285a) für die elektronische Kommunikation (280) von dem zugehörigen Inhalt-Provider (34a-34n) über das Netzwerk (24) zu erhalten; und
   die Daten für den ersten Inhalt (284a, 285a) der elektronischen Kommunikation (280) an die Anwendung, die der geöffneten elektronischen Kommunikation (280) zugeordnet ist, zu übermitteln.

2. System nach Anspruch 1, zusätzlich aufweisend:

   eine dritte Komponente (38), um Daten für den zweiten Inhalt (281, 284, 285) für die elektronische Kommunikation (280) zu bestimmen, um die Daten für den ersten Inhalt (284a, 285a) in Form wenigstens eines Bildes (281, 284, 285) zu unterstützen, das wenigstens einen aktivierbaren Link (284a, 285a) basierend auf dem empfangenen Identifikator (NEW CARS, USED CARS, AMERICAN CARS, CAR REPAIR) unterstützt; und
   eine vierte Komponente (30), um die Daten für den zweiten Inhalt (281, 284, 285) an die Anwendung, die der geöffneten elektronischen Kommunikation (280) zugeordnet ist, zu übermitteln.

3. System nach Anspruch 2, wobei die Daten für den zweiten Inhalt (281, 284, 285) der elektronischen Kommunikation (280) Daten für mindestens ein primäres Bild (281) umfassen, das wenigstens ein sekundäres Bild (284, 285) für einen Textkasten umfasst, der wenigstens einen aktivierbaren Link (284a, 285a) unterstützt.

4. System nach Anspruch 3, wobei der wenigstens eine aktivierbare Link (284a, 285a) mit einer Ziel-Website (42a-42n) verknüpft ist.

5. System nach Anspruch 4, wobei der wenigstens eine aktivierbare Link (284a, 285a) die Browser-Anwendung eines Computers (41b), der mit dem beabsichtigten Empfänger (41a) verknüpft ist, auf die Ziel-Website (42a-42n) leitet, wenn dieser wenigstens eine aktivierbare Link (284a, 285a) aktiviert wird.

6. System nach einem der Ansprüche 1 bis 5, wobei der bestimmte Identifikator wenigstens ein Schlüsselwort (NEW CARS, USED CARS, AMERICAN CARS, CAR REPAIR) umfasst.

7. System nach einem der Ansprüche 1 bis 6, wobei die ersten Daten wenigstens einen Identifikator für wenigstens eine der Kategorien Werbekampagne oder Informationskampagne umfassen.

8. System nach Anspruch 7, wobei die ersten Daten wenigstens einen Identifikator für die E-Mail Adresse des Computers (41b), der mit dem beabsichtigten Empfänger (41a) verknüpft ist, umfassen.

9. System nach Anspruch 2, wobei die erste Komponente (30), die zweite Komponente (30), die dritte Komponente (38) und die vierte Komponente (30) auf wenigstens einem Server sind.

10. Verfahren zur automatischen Bereitstellung von Inhalten für eine elektronische Kommunikation (280), aufweisend:

Empfangen von ersten Daten von dem beabsichtigten Empfänger (41a) einer elektronischen Kommunikation (280) zu einem Zeitpunkt, zu welchem die elektronische Kommunikation (280) geöffnet wird; und
Bereitstellen eines ersten Inhalts (284a, 285a) und eines zweiten Inhalts (281, 284, 285) für eine Anwendung, die der geöffneten elektronischen Kommunikation (280) entsprechend dem Zeitpunkt, zu welchem die elektronische Kommunikation (280) geöffnet ist, zugeordnet ist, wobei:
ein Passwort-Provider (KPV1-KPVn) für den ersten Inhalt (284a, 285a) für die geöffnete elektronische Kommunikation (280) basierend auf den empfangenen ersten Daten bestimmt wird, wobei die empfangenen ersten Daten die Auswahl eines Identifikators (NEW CARS, USED CARS, AMERICAN CARS, CAR REPAIR) für den ersten Inhalt (284a, 285a) und eines Passwort-Providers (KPV1-KPVn) veranlassen, wobei dieser Identifikator und dieser Passwort-Provider aus einer ausgewählten Zufallsauswahl (43ex) von Identifikatoren und Passwort-Providern ausgewählt werden, wobei jeder Passwort-Provider (KPV1-KPVn) mit einem eigenen Inhalt-Provider (34a-34n) für den ersten Inhalt (284a, 285a) verknüpft ist, wobei der Inhalt-Provider (34a-34n) Zugriff auf den zu dem Identifikator (NEW CARS, USED CARS, AMERICAN CARS, CAR REPAIR) zugehörigen ersten Inhalt (284a, 285a) hat;
der ausgewählte Identifikator ausgelesen wird und der ausgewählte Identifikator (NEW CARS, USED CARS, AMERICAN CARS, CAR REPAIR)in Übereinstimmung mit diesem Auslesen an den zugehörigen Inhalt-Provider (34a-34n), der mit dem bestimmten Passwort-Provider (KPV1-KPVn) verknüpft ist, über das Netzwerk (24) weitergegeben wird;
die Daten für den ersten Inhalt (284a, 285a) für die elektronische Kommunikation (280) von dem zugehörigen Inhalt-Provider (34a-34n) über das Netzwerk (24) erhalten werden; und
die Daten für den ersten Inhalt (284a, 285a) der elektronischen Kommunikation (280) an die Anwendung, die der geöffneten elektronischen Kommunikation (280) zugeordnet ist, übermittelt werden.

11. Verfahren nach Anspruch 10, wobei zusätzlich

Daten für den zweiten Inhalt (281, 284, 285) für die elektronische Kommunikation (280) bestimmt werden, um die Daten für den ersten Inhalt (284a, 285a) in Form wenigstens eines Bildes (281, 284, 285) zu unterstützen, das wenigstens einen aktivierbaren Link (284a, 285a) basierend auf dem empfangenen Identifikator (NEW CARS, USED CARS, AMERICAN CARS, CAR REPAIR) unterstützt; und
die Daten für den zweiten Inhalt (281, 284, 285) an die Anwendung, die der geöffneten elektronischen Kommunikation (280) zugeordnet ist, übermittelt werden.

12. Computerprogramm mit Programmcodemitteln, um automatisch Inhalte für eine elektronische Kommunikation (280) bereitzustellen, indem die folgenden Schritte durchgeführt werden, wenn ein derartiges Programm auf einem Computer (30), insbesondere auf einem geeigneten System (39), wie das System nach Anspruch 1, ausgeführt wird:

Empfangen von ersten Daten von dem beabsichtigten Empfänger (41a) einer elektronischen Kommunikation (280) zu einem Zeitpunkt, zu welchem die elektronische Kommunikation (280) geöffnet wird; und
Bereitstellen eines ersten Inhalts (284a, 285a) und eines zweiten Inhalts (281, 284, 285) für eine Anwendung, die der geöffneten elektronischen Kommunikation (280) entsprechend dem Zeitpunkt, zu welchem die elektronische Kommunikation (280) geöffnet ist, zugeordnet ist, wobei:
ein Passwort-Provider (KPV1-KPVn) für den ersten Inhalt (284a, 285a) für die geöffnete elektronische Kommunikation (280) basierend auf den empfangenen ersten Daten bestimmt wird, wobei die empfangenen ersten Daten die Auswahl eines Identifikators (NEW CARS, USED CARS, AMERICAN CARS, CAR REPAIR) für den ersten Inhalt (284a, 285a) und eines Passwort-Providers (KPV1-KPVn) veranlassen, wobei dieser Identifikator und dieser Passwort-Provider aus einer ausgewählten Zufallsauswahl (43ex) von Identifikatoren und Passwort-Providern ausgewählt werden, wobei jeder Passwort-Provider (KPV1-KPVn) mit einem eigenen Inhalt-Provider (34a-34n) für den ersten Inhalt (284a, 285a) verknüpft ist, wobei der Inhalt-Provider (34a-34n) Zugriff auf den zu dem Identifikator (NEW CARS, USED CARS, AMERICAN CARS, CAR REPAIR) zugehörigen ersten Inhalt (284a, 285a) hat;
der ausgewählte Identifikator ausgelesen wird und der ausgewählte Identifikator (NEW CARS, USED CARS, AMERICAN CARS, CAR REPAIR)in Übereinstimmung mit diesem Auslesen an den zugehörigen Inhalt-Provider (34a-34n), der mit dem bestimmten Passwort-Provider (KPV1-KPVn) verknüpft ist, über das Netzwerk (24)

26

weitergegeben wird;

veranlasst wird, dass die Daten für den ersten Inhalt (284a, 285a) für die elektronische Kommunikation (280) von dem zugehörigen Inhalt-Provider (34a-34n) über das Netzwerk (24) erhalten werden; und

veranlasst wird, dass die Daten für den ersten Inhalt (284a, 285a) der elektronischen Kommunikation (280) an die Anwendung, die der geöffneten elektronischen Kommunikation (280) zugeordnet ist, übermittelt werden.

13. Computerprogramm nach Anspruch 12, wobei das Programm die folgenden zusätzlichen Schritte durchführt, wenn das Programm auf dem System ausgeführt wird:

Bestimmen von Daten für den zweiten Inhalt (281, 284, 285) für die elektronische Kommunikation (280), um die Daten für den ersten Inhalt (284a, 285a) in Form wenigstens eines Bildes (281, 284, 285) zu unterstützen, das wenigstens einen aktivierbaren Link (284a, 285a) basierend auf dem empfangenen Identifikator (NEW CARS, USED CARS, AMERICAN CARS, CAR REPAIR) unterstützt; und

Veranlassen, dass die Daten für den zweiten Inhalt (281, 284, 285) an die Anwendung, die der geöffneten elektronischen Kommunikation (280) zugeordnet ist, übermittelt werden.

14. Computerprogramm nach Anspruch 13, wobei die Daten für den zweiten Inhalt (281, 284, 285) der elektronischen Kommunikation (280) Daten für mindestens ein primäres Bild (270) umfassen, das wenigstens ein sekundäres Bild (274, 275) für einen Textkasten umfasst, der wenigstens einen aktivierbaren Link unterstützt.

15. Computerprogramm nach Anspruch 14, wobei der wenigstens eine aktivierbare Link mit einer Ziel-Website verknüpft ist.

16. Computerprogramm nach Anspruch 15, wobei der wenigstens eine aktivierbare Link die Browser-Anwendung eines Computers (41b), der mit dem beabsichtigten Empfänger (41a) verknüpft ist, auf die Ziel-Website leitet, wenn dieser wenigstens eine aktivierbare Link aktiviert wird.

17. Computerprogramm nach einem der Ansprüche 12 bis 16, wobei der bestimmte Identifikator wenigstens ein Schlüsselwort (NEW CARS, USED CARS, AMERICAN CARS, CAR REPAIR) umfasst.

18. Computerprogramm nach einem der Ansprüche 12 bis 17, wobei die Anwendung, die mit der geöffneten elektronischen Kommunikation (280) verknüpft ist, eine E-Mail-Anwendung umfasst.

**Revendications**

1. Système (39) pour fournir automatiquement un contenu à une communication électronique (280), comportant :

un premier composant (30) configuré pour recevoir des premières données provenant du destinataire prévu (41a) d'une communication électronique (280) à un instant correspondant à celui où la communication électronique (280) est ouverte; et,

un deuxième composant (30) configuré pour fournir un premier contenu (284a, 285a) et un second contenu (281, 284, 285) à une application associée à la communication électronique ouverte (280) correspondant à l'instant où la communication électronique (280) a été établie, le deuxième composant (30) étant de plus configuré pour :

déterminer un fournisseur de mot-clé (KPV1-KPVn) pour le premier contenu (284a, 285a) pour la communication électronique ouverte (280) sur la base des premières données reçues, les premières données reçues entraînant la sélection d'un identifiant (VOITURES NEUVES, VOITURES D'OCCASION, VOITURES AMERICAINES, REPARATION DE VOITURE) pour le premier contenu (284a, 285a) et d'un fournisseur de mot-clé (KPV1-KPVn), ledit identifiant et ledit fournisseur de mot-clé étant sélectionnés dans un échantillon aléatoire sélectionné (43ex) d'identifiants et de fournisseurs de mots-clés, chaque fournisseur de mot-clé (KPV1-KPVn) étant associé à son propre fournisseur de contenu (34a-34n) pour le premier contenu (284a, 285a), le fournisseur de contenu (34a-34n) ayant accès au premier contenu (284a, 285a) correspondant à l'identifiant (VOITURES NEUVES, VOITURES D'OCCASION, VOITURES AMERICAINES, REPARATION DE VOITURE) ;

lire l'identifiant sélectionné et, en fonction de la lecture, transmettre l'identifiant sélectionné (VOITURES NEUVES, VOITURES D'OCCASION, VOITURES AMERICAINES, REPARATION DE VOITURE) au fournisseur de contenu désigné (34a-34n) associé au fournisseur de mot-clé déterminé (KPV1-KPVn) sur le réseau (24) ;

obtenir les données relatives au premier contenu (284a, 285a) pour la communication électronique (280) auprès du fournisseur de contenu désigné (34a-34n) sur le réseau (24) ; et,

délivrer les données relatives au premier contenu (284a, 285a) de la communication électronique (280) à l'application associée à la communication électronique ouverte (280).

2. Système selon la revendication 1, comportant de plus :

un troisième composant (38) pour déterminer des données relatives au second contenu (281, 284, 285) pour la communication électronique (280) afin de prendre en charge les données relatives au premier contenu (284a, 285a) sous la forme d'au moins une image (281, 284, 285) qui supporte au moins un lien activable (284a, 285a) basé sur l'identifiant reçu (VOITURES NEUVES, VOITURES D'OCCASION, VOITURES AMERICAINES, REPARATION DE VOITURE) ; et

un quatrième composant (30) pour délivrer les données relatives au second contenu (281, 284, 285) à l'application associée à la communication électronique ouverte (280).

3. Système selon la revendication 2, dans lequel les données relatives au second contenu (281, 284, 285) de la communication électronique (280) incluent des données relatives à au moins une image primaire (281) incluant au moins une image secondaire (284, 285) pour une zone de texte qui prend au charge au moins un lien activable (284a, 285a).

4. Système selon la revendication 3, dans lequel le au moins un lien activable (284a, 285a) est associé à un site web cible (42a-42n).

5. Système selon la revendication 4, dans lequel le au moins un lien activable (284a, 285a), une fois activé, dirige l'application de navigation d'un ordinateur (41b) associé au destinataire prévu (41a), vers le site web cible (42a-42n).

6. Système selon l'une quelconque des revendications 1 à 5, dans lequel l'identifiant déterminé inclut au moins un mot-clé (VOITURES NEUVES, VOITURES D'OCCASION, VOITURES AMERICAINES, REPARATION DE VOITURE).

7. Système selon l'une quelconque des revendications 1 à 6, dans lequel les premières données incluent au moins un identifiant pour au moins un élément parmi une catégorie, une campagne publicitaire ou une campagne d'information.

8. Système selon la revendication 7, dans lequel les premières données incluent au moins un identifiant pour l'adresse de courrier électronique de l'ordinateur (41b) associée au destinataire prévu (41a).

9. Système selon la revendication 2, dans lequel le premier composant (30), le deuxième composant (30), le troisième composant (38) et le quatrième composant (30) sont sur au moins un serveur.

10. Procédé pour fournir automatiquement un contenu à une communication électronique (280), comportant les étapes consistant à :

recevoir des premières données provenant du destinataire prévu (41a) d'une communication électronique (280) à un instant correspondant à celui où la communication électronique (280) a été ouverte; et,

fournir un premier contenu (284a, 285a) et un second contenu (281, 284, 285) à une application associée à la communication électronique ouverte (280) correspondant à l'instant où la communication électronique (280) a été établie, incluant les étapes consistant à :

déterminer un fournisseur de mot-clé (KPV1-KPVn) pour le premier contenu (284a, 285a) pour la communication électronique ouverte (280) sur la base des premières données reçues, les premières données reçues entraînant la sélection d'un identifiant (VOITURES NEUVES, VOITURES D'OCCASION, VOITURES AMERICAINES, REPARATION DE VOITURE) pour le premier contenu (284a, 285a) et d'un fournisseur de mot-clé (KPV1-KPVn), ledit identifiant et ledit fournisseur de mot-clé étant sélectionnés dans un échantillon aléatoire sélectionné (43ex) d'identifiants et de fournisseurs de mots-clés, chaque fournisseur de mot-clé (KPV1-KPVn) étant associé à son propre fournisseur de contenu (34a-34n) pour le premier contenu (284a, 285a), le fournisseur de contenu (34a-34n) ayant accès au premier contenu (284a, 285a) correspondant à l'identifiant (VOITURES NEUVES, VOITURES D'OCCASION, VOITURES AMERICAINES, REPARATION DE VOITURE) ;

lire l'identifiant sélectionné et, en fonction de la lecture, transmettre l'identifiant sélectionné (VOITURES NEUVES, VOITURES D'OCCASION, VOITURES AMERICAINES, REPARATION DE VOITURE) au fournisseur de contenu désigné (34a-34n) associé au fournisseur de mot-clé déterminé (KPV1-KPVn) sur le réseau (24) ;

obtenir les données relatives au premier contenu (284a, 285a) pour la communication électronique (280) auprès du fournisseur de contenu désigné (34a-34n) sur le réseau (24) ; et,

délivrer les données relatives au premier contenu (284a, 285a) de la communication électronique (280) à l'application associée à la communication électronique ouverte (280).

11. Procédé selon la revendication 10, comportant de plus les étapes consistant à :

déterminer des données relatives au second contenu (281, 284, 285) pour la communication électronique (280) afin de prendre en charge les données relatives au premier contenu (284a, 285a) sous la forme d'au moins une image (281, 284, 285) qui supporte au moins un lien activable (284a, 285a) basé sur l'identifiant reçu (VOITURES NEUVES, VOITURES D'OCCASION, VOITURES AMERICAINES, REPARATION DE VOITURE) ; et

délivrer les données relatives au second contenu (281, 284, 285) à l'application associée à la communication électronique établie (280).

12. Programme informatique ayant des moyens de programmation pour fournir automatiquement un contenu à une communication électronique (280), en mettant en oeuvre les étapes suivantes lorsque ce programme est exécuté sur un ordinateur (30), en particulier sur un système (39) adapté, tel que le système de la revendication 1 :

recevoir des premières données provenant du destinataire prévu (41a) d'une communication électronique (280) à un instant correspondant à l'instant où la communication électronique (280) est ouverte; et,

fournir un premier contenu (284a, 285a) et un second contenu (281, 284, 285) à une application associée à la communication électronique ouverte (280) correspondant à l'instant où la communication électronique (280) a été ouverte, incluant les étapes consistant à :

déterminer un fournisseur de mot-clé (KPV1-KPVn) pour le premier contenu (284a, 285a) pour la communication électronique ouverte (280) sur la base des premières données reçues, les premières données reçues entraînant la sélection d'un identifiant (VOITURES NEUVES, VOITURES D'OCCASION, VOITURES AMERICAINES, REPARATION DE VOITURE) pour le premier contenu (284a, 285a) et d'un fournisseur de mot-clé (KPV1-KPVn), ledit identifiant et ledit fournisseur de mot-clé étant sélectionnés dans un échantillon aléatoire sélectionné (43ex) d'identifiants et de fournisseurs de mots-clés, chaque fournisseur de mot-clé (KPV1-KPVn) étant associé à son propre fournisseur de contenu (34a-34n) pour le premier contenu (284a, 285a), le fournisseur de contenu (34a-34n) ayant accès au premier contenu (284a, 285a) correspondant à l'identifiant (VOITURES NEUVES, VOITURES D'OCCASION, VOITURES AMERICAINES, REPARATION DE VOITURE) ; lire l'identifiant sélectionné et, en fonction de la lecture, transmettre l'identifiant sélectionné (VOITURES NEUVES, VOITURES D'OCCASION, VOITURES AMERICAINES, REPARATION DE VOITURE) au fournisseur de contenu désigné (34a-34n) associé au fournisseur de mot-clé déterminé (KPV1-KPVn) sur le réseau (24) ;

entraîner l'obtention des données relatives au premier contenu (284a, 285a) pour la communication électronique (280) provenant du fournisseur de contenu désigné (34a-34n), sur le réseau (24) ; et,

entraîner la livraison des données relatives au premier contenu (284a, 285a) de la communication électronique (280), à l'application associée à la communication électronique ouverte (280).

13. Programme informatique selon la revendication 12, dans lequel le programme met en oeuvre les étapes supplémentaires suivantes lorsque le programme est exécuté sur le système :

déterminer des données relatives au second contenu (281, 284, 285) pour la communication électronique (280) afin de prendre en charge les données relatives au premier contenu (284a, 285a) sous la forme d'au moins une image (281, 284, 285) qui supporte au moins un lien activable (284a, 285a) basé sur l'identifiant reçu (VOITURES NEUVES, VOITURES D'OCCASION, VOITURES AMERICAINES, REPARATION DE VOITURE) ; et

entraîner la livraison des données relatives au second contenu (281, 284, 285) à l'application associée à la communication électronique ouverte (280).

14. Programme informatique selon la revendication 13, dans lequel les données relatives au second contenu (281, 284, 285) de la communication électronique (280) incluent des données relatives à au moins une image primaire (270) incluant au moins une image secondaire (274, 275) pour une zone de texte qui prend en charge au moins un lien activable.

15. Programme informatique selon la revendication 14, dans lequel le au moins un lien activable est associé à un site web cible.

16. Programme informatique selon la revendication 15, dans lequel le au moins un lien activable, une fois activé, dirige l'application de navigation d'un ordinateur (41b) associé au destinataire prévu (41a), vers le site web cible.

17. Programme informatique selon l'une quelconque des revendications 12 à 16, dans lequel l'identifiant déterminé inclut au moins un mot-clé (VOITURES NEUVES, VOITURES D'OCCASION, VOITURES AMERICAINES, REPARATION DE VOITURE).

18. Programme informatique selon l'une quelconque des revendications 12 à 17, dans lequel l'application associée à la communication électronique ouverte (280) inclut une application de courrier électronique.

FIG.1

FIG.2

FIG.3

| ✉ Want A New Car — Message (HTML) | _ ⧉ ✕ |
|---|---|

File  Edit  View  Insert  Format  Tools  Actions  Help

🗨⤵ Reply | 🗨⤵ Reply to All | ↳✎ Forward | 🖨 🖼 | ⊽ | 🗗 ✕ ◇ ▾ ◇ ▾ 🄰͘

From:     New Car                                          Sent: Tue 12/5/2006 1:19PM
To:       User1
Cc:
Subject: Want A New Car ?

△
～151a

I1
*151*

*150*

🎝Start ‖ 🗔 ▷ ◎ ◎ ⟫ |                                          4:41 PM

FIG.4

34

## FIG.5

START  —201

CHECK RECEIVED REQUEST
FOR THE CREATIVE
TO SEE IF THIS REQUEST
IS IN THE LISTING CACHE  —202

IS THIS
REQUEST IN THE
LISTING CACHE
?  —204

NO → 

YES ↓

PULL LISTING TEXT
FROM LISTING CACHE
CORRESPONDING TO REQUEST  —220

FROM
BLOCK 306

ISOLATE CAMPAIGN ID
(CID) FROM REQUEST  —210

GET KEYWORDS
FROM CAMPAIGN ID  —211

DETERMINE NUMBER
OF LISTINGS (N) FOR
THE CREATIVE  —212

PASS KEYWORD TO
REQUISITE CONTENT
SERVER  —213

READ IN LISTING TEXT
WITH N LISTINGS
RETURNED FROM THE
CONTENT SERVER  —214

STORE LISTING TEXT
INSIDE A LISTING
CACHE  —216

STORE DATA AND
LISTING TEXT DATA
INSIDE A CLICK
CACHE  —217

PASS ALL LISTINGS
FOR THIS REQUEST TO
TO IMAGING SERVER  —230

TO
BLOCK 302

CONNECT IMAGING
SERVER OUTPUT TO
PROXY SERVER  —232

234— END

KEY 1
UNIQUE ID :   57e ..... 51f5
CAMPAIGN IDENTIFIER : 10191
MAILING ID : 10000

KEY 2
UNIQUE ID :   24g ..... 74q7
CAMPAIGN IDENTIFIER : 10191
MAILING ID : 10000

KEY 3
UNIQUE ID :   34p ..... 88p9
CAMPAIGN IDENTIFIER : 10192
MAILING ID : 10001

KEY 4
UNIQUE ID :   68f ..... 93r8
CAMPAIGN IDENTIFIER : 10193
MAILING ID : 10002

•
•
•

KEY n
UNIQUE ID :   77v ..... 43p8
CAMPAIGN IDENTIFIER : 10233
MAILING ID : 10010

*43a*

# FIG.6A

CID: 10191

| KEY WORD | KEY WORD PROVIDER | | | | |
|---|---|---|---|---|---|
| | KPV1 | KPV2 | KPV3 | KPV4 | KPVn |
| NEW CARS | X | X | X | X | |
| USED CARS | | X | | X | X |
| AMERICAN CARS | | X | | | X |
| CAR REPAIR | | X | X | X | X |

43e

43ex

FIG.6B

| | KPV1 | KPV2 | KPV3 |
|---|---|---|---|
| NEW CARS | $1.00 $0.98 $0.96 | $1.00 | $1.00 $0.10 |
| USED CARS | | $1.20 | |
| AMERICAN CARS | | $1.50 | |
| CAR REPAIR | | $1.70 | $1.90 $0.10 $0.03 $0.01 |

*43ex*

## FIG.6C

KEY 1

TITLE : FORD
ford.com        POS  =  1
AD  DESCRIPTION

TITLE : CHEVROLET
chevrolet.com        POS  =  2
AD  DESCRIPTION

*250*

*252a*

*43c*

*252b*

# FIG.7

KEY  1

FORD
POS  =  1
URL  REDIRECT : www.ford.com

CHEVROLET
POS  =  2
URL  REDIRECT : www.chevrolet.com

*252a'*

*252b'*

*43d*

*250'*

# FIG.8

**IT'S TIME.**

**Want a new car ?**

*270*

POS=1

POS=2

*274*

*275*

FIG.9

EP 2 071 783 B1

FIG.10

```
                                                    ┌─ 302
┌──────────────────────────────────┐
│  RECEIVE DATA, INCLUDING UNIQUE ID,  │
│ CAMPAIGN ID, MAILING ID AND POSITION │
│  FROM "CLICKED" TEXT OF E-MAIL       │
└──────────────────────────────────┘
                                                    ┌─ 304
┌──────────────────────────────────┐
│  QUERY CLICK CACHE FOR REDIRECT  │
│  URL CORRESPONDING TO RECEIVED   │
│       KEY AND POSITION           │
└──────────────────────────────────┘

┌─ 308                        ┌─ 306
┌──────────┐        ╱ IS THIS      ╲
│ RETURN TO │  NO   ╱ REDIRECT URL IN THE ╲
│BLOCKS 210 │◄───── ╲   CLICK CACHE   ╱
│ TO 217    │        ╲      ?       ╱
└──────────┘            │YES
                                    ┌─ 310
                    ┌──────────────────────┐
                    │  SEND WEB BROWSER OF │
                    │  USER TO REDIRECT URL│
                    └──────────────────────┘
```

FIG.11

FIG.12

EP 2 071 783 B1

FIG.13A

EP 2 071 783 B1

*E1*

*582*

| File | Edit | View | Insert | Format | Tools | Actions | Help |
|---|---|---|---|---|---|---|---|

Send | Ariel | 10 | **B** | *I* | U

Snagit | Window

To: Joe@abc.com
Cc:
Bcc:
Subject: Game Tonight

I have tickets to tonights game. Do you want to go ?
User1

*580*

FIG.13B

START — 602

604 — EVALUATE md5

606
HAS
md5 RESPONDED TO A
PREVIOUS CAMPAIGN
? — YES

NO

620
SELECT TARGET
CAMPAIGN(S) BASED
ON PREVIOUS
RESPONSES

641
CHECK
RESPONDER
OPTIMIZED
CAMPAIGN

610 — CHECK
NON-RESPONDER
OPTIMIZED CAMPAIGN

630

634
FILTER BY EXCLUDE

635
ARE
THERE ANY CAMPAIGNS
REMAINING ? — NO

YES

636
FILTER BY CAMPAIGN
INCLUDED

642 — SELECT CAMPAIGN
FROM REMAINING
CAMPAIGNS AND
TAG LINE FOR THE
SELECTED CAMPAIGN

637
YES — ARE
THERE ANY CAMPAIGNS
REMAINING ? — NO

644 — SEND TAG LINE BACK
TO BACKBONE
SERVER FOR MTA

640
WAS
TARGET CAMPAIGN
SELECTED BASED ON PREVIOUS
RESPONSES ? (DID THIS
START AT BLOCK
620 ?) — YES

NO

646 — END

FIG.14

FIG.15A

FIG.15B

EP 2 071 783 B1

*E2*

| ✉ Game Tonight — Message(Rich Text) | _ 🗗 ✕ |
|---|---|

File  Edit  View  Insert  Format  Tools  Actions  Help

📧↩Reply  📧↩Reply to All  ↩📧Forward  🖨 📠  ⴲ  🗗 ✕  ◇ ▾ ◇ ▾ ⚠

| From: | USER1 |
|---|---|
| To: | Joe@abc.com |
| Cc: | |
| Subject: | Game Tonight |

I have tickets to tonights game. Do you want to go ?
User1

*680*

How About A New Car ?
Great Deals, Great Prices          Click Here          *682*

*682a*                                    *682b*

# FIG.15C

```
┌─────────────────────────┐
│   RECEIVE  DATA  FROM   │  702
│     REQUISITE  USER     │
│  (INTENDED  RECIPIENT)  │
└─────────────────────────┘
            │
            ▼
┌─────────────────────────┐
│   ISOLATE  CAMPAIGN ID  │  704
│   FROM  RECEIVED  DATA  │
└─────────────────────────┘
            │
            ▼
┌─────────────────────────┐
│    OBTAIN  KEYWORD      │  706
│    FOR  CAMPAIGN  OR    │
│  ISOLATED  CAMPAIGN ID  │
└─────────────────────────┘
            │
            ▼
┌─────────────────────────┐
│    PASS  KEYWORD  TO    │  708
│  REQUISITE  CONTENT     │
│        SERVER           │
└─────────────────────────┘
            │
            ▼
┌─────────────────────────┐
│  OBTAIN  LISTING  FROM  │  710
│  REQUISITE  CONTENT     │
│   SERVER  WITH  URL     │
│    (REDIRECT  URL)      │
└─────────────────────────┘
            │
            ▼
┌─────────────────────────┐
│  SEND  WEB  BROWSER     │  712
│    OF  USER  TO         │
│    REDIRECT  URL        │
└─────────────────────────┘
```

# FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7184970 B1
- US 20050038861 A1
- US 91597504 A
- US 77406607 A
- US 774066 A